# EUROPÄISCHE PATENTSCHRIFT

(11) **EP 3 719 077 B1**
(45) Veröffentlichungstag und Bekanntmachung des Hinweises auf die Patenterteilung: **21.09.2022**
(21) Anmeldenummer: 19166712.0
(22) Anmeldetag: 02.04.2019
(51) Int. Cl.: C08L 83/10, C08G 77/448

(54) **SILOXAN-HALTIGE BLOCKCOPOLYCARBONATE MIT GERINGER DOMÄNENGRÖSSE**
SILOXANE-CONTAINING BLOCK COPOLYCARBONATES WITH SMALL DOMAIN SIZES
COPOLYCARBONATES SÉQUENCÉS CONTENANT DU SILOXAN À FAIBLE GRANULOMÉTRIE

(43) Veröffentlichungstag der Anmeldung: 07.10.2020
(73) Patentinhaber: Covestro Deutschland AG, 51373 Leverkusen (DE)
(72) Erfinder: MEYER, Alexander, 40489 Düsseldorf (DE); LIESENFELDER, Ulrich, 51469 Bergisch-Gladbach (DE); HUGGINS, John, 51373 Leverkussen (DE)
(74) Vertreter: Levpat

(56) Entgegenhaltungen:
- US-A1- 2015 011 688
- US-B2- 10 035 884

## Beschreibung

Die vorliegende Erfindung betrifft Polysiloxan-Polycarbonat-Blockcokondensate (im Folgenden auch SiCoPC genannt), die eine geringe Siloxandomänengröße aufweisen. Die Blockcokondensate werden bevorzugt im Schmelzeumesterungsverfahren ausgehend von speziellen Polycarbonaten und Hydroxyaryl-terminierten Polysiloxanen hergestellt. Insbesondere betrifft die vorliegende Erfindung Polysiloxan-Polycarbonat-Blockcokondensaten mit speziellen Verträglichkeitsvermittlern. Ferner betrifft die Erfindung die Herstellung der genannten Blockcokondensate mittels einer reaktiven Extrusion. Die erfindungsgemäßen Polysiloxan-Blockcokondensate weisen eine feine Polysiloxan-Domänenverteilung auf und zeichnen sich durch gute mechanische Eigenschaften sowie eine gute Schmelzestabilität aus.

Es ist bekannt, dass Polysiloxan-Polycarbonat-Blockcokondensate gute Eigenschaften bezüglich der Tieftemperaturschlagzähigkeit bzw. Tieftemperaturkerbschlagzähigkeit, der Chemikalienbeständigkeit und Außenbewitterungsbeständigkeit sowie der Alterungseigenschaften und Flammbeständigkeit aufweisen. Sie sind in diesen Eigenschaften z.T. den herkömmlichen Polycarbonaten (beispielsweise Homopolycarbonat auf Bisphenol-A Basis) überlegen.

Diese Cokondensate werden ausgehend von den Monomeren industriell zumeist über das Phasengrenzflächenverfahren mit Phosgen hergestellt. Ferner ist die Herstellung dieser Polysiloxan-Polycarbonat-Blockcokondensate über das Schmelzeumesterungsverfahren unter Einsatz von Diphenylcarbonat bekannt. Diese Verfahren haben den Nachteil, dass die dazu verwendeten industriellen Anlagen zur Herstellung von Standard-Polycarbonat verwendet werden und deshalb eine große Anlagengröße aufweisen. Die Herstellung spezieller Blockcokondensate ist auf diesen Anlagen wegen des geringeren Volumens dieser Produkte ökonomisch oft nicht sinnvoll. Ferner können die zur Herstellung der Cokondensate benötigten Einsatzstoffe, wie z.B. der Polydimethylsiloxane, die Anlage beeinträchtigen, da sie zu Verschmutzung der Anlage oder der Lösungsmittelkreisläufe führen können. Außerdem werden zur Herstellung Einsatzstoffe wie Phosgen benötigt oder erfordern wie im Schmelzeumesterungsverfahren einen hohen Energiebedarf.

Die Herstellung von Polysiloxan-Polycarbonat-Blockcokondensatenüber das Phasengrenzflächenverfahren ist literaturbekannt und beispielsweise in US-PS 3 189 662, US-PS 3 419 634, DE-OS 3 34 782 und EP 0 122 535 beschrieben.

Die Herstellung von Polysiloxan-Polycarbonat-Blockcokondensaten nach dem Schmelzumesterungsverfahren aus Bisphenol, Diarylcarbonat, silanolendterminierten Polysiloxanen und Katalysator, ist in der US 5 227 449 beschrieben. Als Siloxanverbindungen werden dabei Polydiphenyl- bzw. Polydimethylsiloxan-Telomere mit Silanolendgruppen verwendet. Bekannt ist jedoch, dass derartige Dimethylsiloxane mit Silanolendgruppen im sauren oder basischen Medium mit abnehmender Kettenlänge, im Gegensatz zu Diphenylsiloxan mit Silanolendgruppen, zunehmend zur Selbstkondensation neigen, so dass ein Einbau in das entstehende Copolymer dadurch erschwert ist. Dabei gebildete cyclische Siloxane verbleiben im Polymer und wirken außerordentlich störend bei Anwendungen im Elektrik-/Elektronikbereich.

In der US 5 504 177 wird die Herstellung eines Polysiloxan-Polycarbonat-Blockcokondensat über die Schmelzumesterung aus einem carbonatterminierten Silicon mit Bisphenol und Diarylcarbonat beschrieben. Aufgrund der großen Unverträglichkeit der Siloxane mit Bisphenol und Diarylcarbonat ist ein gleichmässiger Einbau der Siloxane in die Polycarbonat-Matrix über dem Schmelzumesterungsprozess nicht oder nur sehr schwer zu erreichen.

Nachteilig bei allen diesen Verfahren ist die Verwendung von organischen Lösungsmitteln in mindestens einem Schritt der Synthese der Polysiloxan-Polycarbonat-Blockcokondensateoder die Verwendung von Phosgen als Einsatzstoff oder die ungenügende Qualität des Cokondensats. Insbesondere ist die Synthese der Cokondensate ausgehend von den Monomeren sowohl im Phasengrenzflächenverfahren wie auch vor allem im Schmelzeumesterungsverfahren sehr aufwändig. So müssen z.B. bei Schmelzeverfahren ein geringes Vakuum und geringe Temperaturen angewendet werden, um ein Verdampfen und damit Entfernen der Monomere zu verhindern. Erst in späteren Reaktionsstufen, in denen sich Oligomere mit höherer Molmasse gebildet haben, können niedrigere Drücke und höhere Temperaturen angewendet werden. Dies bedeutet, dass die Reaktion über mehrere Stufen geführt werden muss und die Reaktionszeiten damit entsprechend lang sind.

Um die oben beschriebenen Nachteile zu vermeiden, sind auch Reaktivextrusionsverfahren zur Herstellung Siloxan-basierter Blockcopolycarbonate beschrieben worden. Dies ist z.B. in US 5414054 und US 5821321 publiziert worden. Hier wird ein herkömmliches Polycarbonat mit einem speziellen Polydimethylsiloxan in einem Reaktivextrusionsverfahren umgesetzt. Nachteilig an diesem Verfahren ist allerdings der Einsatz spezieller Silikonkomponenten, welche hochpreisig sind. Ferner werden bei diesem Verfahren hochwirksame Umesterungskatalysatoren eingesetzt, welche die Herstellung der Cokondensate innerhalb kurzer Verweilzeiten auf einem Extruder ermöglichen. Diese Umesterungskatalysatoren verbleiben allerdings im Produkt und können nicht oder nur ungenügend inaktiviert werden. Deshalb weisen Spritzgusskörper aus den so hergestellten Cokondensaten ein ungenügendes Alterungsverhalten, insbesondere ein ungenügendes Thermoalterungsverhalten auf. Damit ist das resultierende Blockcopolycarbonat nicht für hochqualitative Anwendungen geeignet. Dieses Produkt weist im Vergleich zu einem Blockcopolycarbonat aus dem Phasengrenzflächenverfahren nicht die entsprechenden Eigenschaften, wie Alterungsverhalten und mechanische Eigenschaften auf.

Ein weiteres Problem bei der Herstellung Siloxan-haltiger Blockcokondensate über das Schmelzeumesterungsverfahren ausgehend von Polycarbonaten und Polydimethylsiloxanen ist die hohe Konzentration der Reaktionspartner im Reaktionsgemisch. Demgegenüber ist die Konzentration der Reaktionspartner im Phasengrenzflächenverfahren gering, da hier in Lösung gearbeitet wird und zusätzlich von den Monomeren, d.h. von einem Bisphenol, ausgegangen wird. Das Bisphenol wird also in verdünnter Lösung mit dem Siloxanblock aufkondensiert. Dies führt dazu, dass die Domänengröße im Schmelzeumesterungsprozess - sofern man von Oligo- bzw. Polycarbonaten ausgeht - deutlich größer ausfällt als im Vergleich zu einem Verfahren bei welchem in verdünnter Lösung gearbeitet wird und in dem von den Monomeren ausgegangen wird. Dadurch kommt es bei entsprechenden Materialien, die im Schmelzeumesterungsprozess hergestellt werden, häufig zu Oberflächenstörungen. Diese Oberflächenstörungen sind eine direkte Folge der hohen Domänengröße.

Die Domänengröße liegt im Phasengrenzflächenprozess typischerweise unterhalb von 100 nm. Dadurch lassen sich transluzente bzw. sogar transparente Materialien erhalten, da es durch die geringe Domänengröße kaum noch zu einer Lichtstreuung kommt.

Die Herstellung von Siloxan-haltigen Blockcokondensaten mit niedrigem Trübungsgrad ist prinzipiell bekannt. In WO 2004016674 wird ein Vorkondensat im Phasengrenzflächenverfahren aus einem Oligocarbonat und Siloxan hergestellt und dann in einem zweiten Schritt mit einem Bisphenol im Phasengrenzflächenverfahren weiter aufkondensiert.

Es ist prinzipiell bekannt, dass durch Zusätze, die die Domänengröße der Siloxandomänen im Blockcokondensat herabgesetzt werden kann. Der Zusatz von phasengrenzflächenaktiven Substanzen, wie sie z.B. in DE19523000 beschrieben sind, lassen sich allerdings nicht im erfindungsgemäßen Verfahren einsetzen, da sie mit dem im Schmelzeumesterungsprozess verbundenen hohen Temperaturen und relativ langen Verweilzeiten nicht kompatibel sind. Auch andere Kompatibilisatoren lassen sich meist aufgrund der hohen Temperaturen nicht einsetzen, da sie abgebaut werden oder zu einem Produkt mit mangelnder Schmelzestabilität führen.

Die US20070238846 beschreibt trübungsfreie Siloxan-Blockcokondensate ausgehend von Siloxanblöcken mit besonders niedrigem Molekulargewicht. Auch diese Blockcokondensate werden im Phasengrenzflächenverfahren hergestellt.

Das Schmelzeumesterungsverfahren hat den Nachteil, dass man prinzipiell nicht verdünnt arbeiten kann und die Reaktionspartner immer sehr konzentriert vorliegen. Dabei kommt es erfahrungsgemäß zur Ausbildung von Siloxandomänen in der Größe zwischen 0,1 und 10 µm.

Eine hohe Domänengröße wirkt sich negativ auf die Verarbeitungseigenschaften aus. Durch große Domänen kann es zu Entmischungen kommen, welche sich durch inhomogene Oberflächenstruktur äußern können und z.T. zu Fließlinien und Streifenbildung führt. Da große Domänen scherempfindlich sind, lassen sich derartige Materialien auch schwer im Spritzguss verarbeiten, so dass nur sehr kleine Verarbeitungsfenster möglich sind. So muss zum Teil bei sehr niedrigen Einspritzgeschwindigkeiten gearbeitet werden, was häufig unerwünscht ist, da es die Zykluszeit herabsetzt.

Bei Schmelzeumesterungsverfahren und insbesondere bei sogenannten Reaktivextrusions-Verfahren besteht prinzipiell die Gefahr, dass Katalysatoren im Endprodukt verbleiben, welche bei nachfolgender Verarbeitung - wie z.B. im Spritzguss - zu Molekulargewichtsabbau führen können. Dies kann sich durch Oberflächenstörungen und allgemein durch schlechte Verarbeitungseigenschaften äußern.

Aus der US6,284,824 B1 und der WO 2017/042272 A1 sind spezielle Siloxane bekannt, welche in Polycarbonatzusammensetzungen eingesetzt werden, um ihre Flammwidrigkeit zu verbessern. Da diese Dokumente weder Polysiloxan-Polycarbonat-Blockcokondensate noch deren Herstellung ansprechen, kann keine Lehre entnommen werden, wie sich die offenbarten Siloxane bei der Herstellung von Polysiloxan-Polycarbonat-Blockcokondensaten verhalten.

US 10035884 B2 offenbart Polysiloxan-Polycarbonat-Blockcokondensate mit Siloxandomänen definierter Grösse und zwar <200 nm.

Ausgehend vom geschilderten Stand der Technik bestand daher die Aufgabe, mindestens einen Nachteil des Stands der Technik zu beheben. Insbesondere lag der vorliegenden Erfindung die Aufgabe zu Grunde, ein Polysiloxan-Polycarbonat-Blockcokondensat mit kleiner Siloxandomänengröße zu entwickeln, welches gleichzeitig gute mechanische Eigenschaften aufweist. Das Blockcokondensat soll dabei bevorzugt im Schmelzeumesterungsprozess hergestellt werden.

Dabei sollen die Domänengröße einen D90 Wert von kleiner als 120 nm, bevorzugt kleiner als 110 nm, und insbesondere bevorzugt kleiner 100 nm erreichen. Der Anteil an Teilchen mit einem Durchmesser kleiner 100 nm soll bevorzugt größer 70 % insbesondere bevorzugt größer 80 % und ganz besonders bevorzugt größer 90 % bezogen auf die Gesamtzahl der Siloxandomänen sein.

Gelöst wurden diese Aufgaben durch die erfindungsgemäße Polycarbonatzusammensetzung, das erfindungsgemäße Verfahren und die erfindungsgemäße Verwendung.

Es konnte überraschend gezeigt werden, dass durch Zugabe eines Siloxan-basierten Additivs, welches sowohl aromatische als auch aliphatische Gruppen enthält, Blockcokondensate mit geringer Siloxan-Domänengröße erhalten werden können. Dabei wurden gleichzeitig SiCoPCs mit hoher Schmelzestabilität erhalten. Ohne an eine Theorie gebunden sein zu wollen, scheint die gleichzeitige Anwesenheit von aromatischen Gruppen und aliphatischen Gruppen im siloxan-basierten Additiv zwischen den unterschiedlichen Phasen des Polycarbonats und des Siloxanblockes zu vermitteln. Dies führt insbesondere bei einem Schmelzeumesterungsprozess zu einer verbesserten SiloxanDomänenverteilung mit geringerer Größe. Dieser Effekt ist besser als mit einem siloxan-basiertem Additiv, welches nur aromatische Gruppe aufweist.

Durch die verbesserte Siloxan-Domänengröße wurden verbesserte Verarbeitungseigenschaften des SiCoPCs erhalten. Die Tendenz zur Entmischung wurde reduziert und das Verarbeitungsfenster für den Spritzguss der erfindungsgemäßen Polycarbonatzusammensetzungen wurde verbreitert.

Die vorliegende Erfindung betrifft somit unter anderem ein Verfahren zur Herstellung von Polysiloxan-Polycarbonat-Blockcokondensaten, wobei
A) wenigstens ein Polycarbonat mit
B) wenigstens einem hydroxyarylterminierten (Poly)Siloxan unter Verwendung
C) wenigstens eines Siloxans der allgemeinen chemischen Formel (I), (Ia) oder beliebige Mischungen davon, 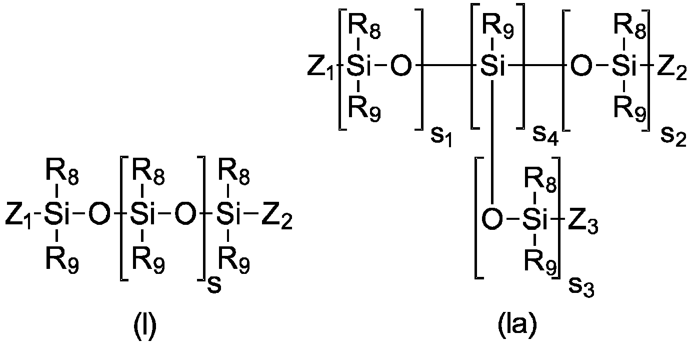 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
   R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
   s, s₁, s₂, s₃ und s₄ eine natürliche Zahl zwischen 1 und 250 ist,
   in der Schmelze umgesetzt wird, dadurch gekennzeichnet, dass das Verfahren einen Schritt der Zugabe der Komponente C) zur Komponente A), zur Komponente B) und/oder zu einer Mischung aus Komponente A) und B) umfasst.

Ebenso betrifft die vorliegende Erfindung eine Polycarbonatzusammensetzung, enthaltend
(i) wenigstens ein Polysiloxan-Polycarbonat-Blockcokondensat,
(ii) wenigstens ein Siloxan der allgemeinen chemischen Formel (I), (Ia) oder beliebige Mischungen davon, 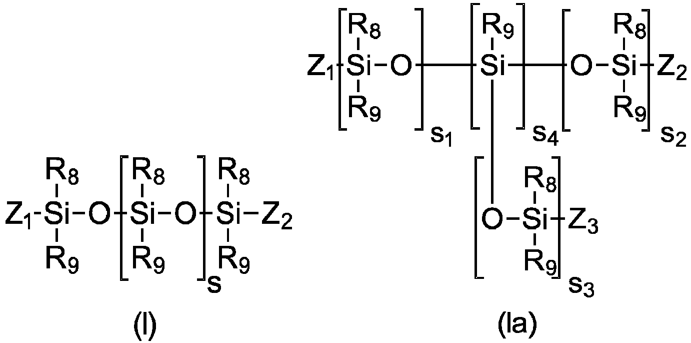 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; 2,3-Epoxypropyloxy, Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
   R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
   s, s₁, s₂, s₃ und s₄ eine natürliche Zahl zwischen 1 und 250 ist,
(iii) optional mindestens ein weiteres Polymer, welches von Komponente (i) verschieden ist, und
(iv) optional mindestens ein weiteres Additiv.

Eine solche Zusammensetzung resultiert bevorzugt, wenn man das erfindungsgemäße Verfahren verwendet. Gemäß dem erfindungsgemäßen Verfahren wird ein Polysiloxan-Polycarbonat-Blockcokondensat erhalten, welches somit bevorzugt die Komponente (i) der erfindungsgemäßen Zusammensetzung darstellt. Wird das erfindungsgemäße Verfahren in Anwesenheit der Komponente C) durchgeführt, so verbleibt diese wenigstens in Spuren im Produkt, so dass das unmittelbare Verfahrensprodukt die erfindungsgemäße Polycarbonatzusammensetzung sein kann.

Im Folgenden wird zunächst auf das erfindungsgemäße Verfahren eingegangen. Dabei ist es aber selbstverständlich, dass diese Beschreibungen auch aus dem oben genannten Grund für die erfindungsgemäße Polycarbonatzusammensetzung näher beschreibend sind.

Das erfindungsgemäße Verfahren umfasst bevorzugt, bzw. ist besonders bevorzugt ein Polykondensationsverfahren. Dabei ist es weiterhin bevorzugt, dass das erfindungsgemäße Verfahren in einem Schmelzeumesterungsverfahren ausgeführt wird. Bevorzugt werden Polycarbonat A) mit dem hydroxyarylterminierten (Poly)Siloxan B) und der Komponente C) in der Schmelze auf einem Extruder oder Hochviskosreaktor umgesetzt. Solche Verfahren sind auch bekannt als Reaktivextrusionsverfahren.

Das Schmelzeumersterungsverfahren sowie das Reaktivextrusionsverfahren sind allgemein bekannt (z.B. US 5,227,449, US 5,504,177 sowie die oben zitierte Literatur).

Bei dem Extruder oder Schmelzereaktor kann es sich um einen Einwellenreaktor, um einen Doppelwellenreaktor, oder einen Mehrwellenreaktor, beispielsweise einen Planetwalzenextruder oder Ringextruder handeln. Ferner kann es sich um einen Knetreaktor mit hohem Volumen handeln.

Das Verfahren kann auf einem einzigen Gerät - z.B. einem Doppelwellenextruder als auch zweistufig, d.h. einer Reaktorkombination ausgeführt werden. Die Reaktorkombination besteht bevorzugt aus einem Vorreaktor - wie einem Doppelwellenextruder - und einem Hochviskosreaktor.

Bevorzugt wird das Verfahren bei Temperaturen von 280 °C bis 370 °C, vorzugsweise von 290 °C bis 360 °C, weiter bevorzugt von 300 °C bis 350 °C und Drücken von 0,001 mbar bis 5 mbar bevorzugt 0,005 mbar bis 4 mbar insbesondere bevorzugt 0,02 bis 3 mbar und ganz besonders bevorzugt 0,03 bis 1 mbar bevorzugt in Gegenwart eines Katalysators durchgeführt. Als Reaktor wird bevorzugt ein Einwellen- oder Zweiwellenextruder, insbesondere bevorzugt ein gleichsinniger Zweiwellenextruder eingesetzt. Der Zweiwellenextruder zeichnet sich dadurch aus, dass er mehrere Vakuumzonen umfasst. Die Verarbeitungstemperatur (Massetemperatur) bei Verwendung eines Zweiwellenextruders beträgt bevorzugt 280 °C bis 400 °C, bevorzugt 290 bis 380 °C und der Druck in der ersten Stufe 500 bis 0,01 mbar, bevorzugt 200 bis 0,1 mbar und in den folgenden Vakuumstufen 0,001 mbar bis 50 mbar.

Das Reaktivextrusionsverfahren kann in einem zweistufigen Verfahren durchgeführt werden, wobei die Reaktorkombination bevorzugt aus einem Zwei- oder Einwellenextruder und einem Hochviskosreaktor besteht und die entstehenden niedermolekularen Spaltprodukte durch Verdampfung im Vakuum entfernt werden. Auf dem Zwei- bzw. Einwellenextruder erfolgt das Aufschmelzen des Polycarbonats wie auch die Zumischung der weiteren Einsatzstoffe wie Silikonkomponente und ggf. Katalysatoren ggf. in Form von Masterbatchen. Ferner erfolgt hier die Vermischung und Vorreaktion der Komponenten. Das Vorprodukt wird dann dem Hochviskosreaktor zugeführt in dem es bei gleichzeitiger Zuführung von thermischer und mechanischer Energie im Vakuum vollständig zum Polykondensationsprodukt ausreagiert. Die flüchtigen niedermolekularen Spaltprodukte und andere niedermolekulare Bestandteile können sowohl im Vorreaktor (Ein- oder Zweiwellenextruder) nach dem Vorreaktor und/oder im Hochviskosreaktor abgezogen werden. In einer bevorzugten Ausführungsform werden bereits im Vorreaktor niedermolekulare Bestandteile unter Vakuum entfernt. Besonders bevorzugt geschieht dies in zwei Vakuumstufen, wobei die erste Vakuumstufe bevorzugt bei einem Absolutdruck von 10 bis 800 mbar und besonders bevorzugt bei einem Absolutdruck von 10 bis 100 mbar betrieben wird, und die zweite Vakuumstufe bevorzugt bei 0,1 bis 100 mbar Absolutdruck und besonders bevorzugt bei 0,2 bis 5 mbar Absolutdruck. Die Reaktion im Hochviskosreaktor wird ebenfalls unter Vakuum durchgeführt. Das Vakuum beträgt 0,001 mbar bis 50 mbar bevorzugt 0,005 mbar bis 40 mbar insbesondere bevorzugt 0,02 bis 30 mbar und ganz besonders bevorzugt 0,03 bis 5 mbar absolut.

Als Hochviskosreaktor werden erfindungsgemäß Apparate eingesetzt, die für die Verarbeitung von hochvioskosen Massen geeignet sind, die unter guter Durchmischung eine ausreichende Verweilzeit zur Verfügung stellen und die Schmelze dem erfindungsgemäß erforderlichen Vakuum aussetzen. In der Patentliteratur werden zahlreiche Apparate beschrieben, die diese Anforderungen grundsätzlich erfüllen und die erfindungsgemäß eingesetzt werden können. Beispielsweise können Reaktoren nach EP 460 466 , EP 528 210, EP 638 354, EP 715 881, EP 715 882, EP 798 093 eingesetzt werden oder solche nach EP 329 092, nach EP 517 068, EP 1 436 073 oder WO 20021114 sowie solche nach EP 222 599.

Bevorzugt wird ein Reaktor nach EP 460 466 eingesetzt, der sich kinematisch selbst reinigt, und aus zwei oder mehreren parallelen gleichsinnig oder gegenläufig, bevorzugt gegenläufig rotierenden Wellen besteht, auf denen sich axial versetzte, nicht notwendigerweise kreisförmige Scheiben mit auf ihrem Umfang verteilten Abstreifern befinden, und einem umschließenden Gehäuse. Dieser Reaktor/Mischer ist dadurch gekennzeichnet, dass alle Oberflächen der Abstreifer kinematisch gereinigt werden, dass insbesondere bei gleichschnell rotierenden Wellen in einem beliebigen Radialschnitt durch den Mischer alle nach außen weisenden Flächen der Abstreifer eine Welle, falls sie vom Gehäuse gereinigt werden, konzentrisch zum Rotationsmittelpunkt sind, anderenfalls jedoch in etwa den Achsabstand als Krümmungsradius aufweisen und konvex sind und von ein benachbarten Welle oder deren Abstreifern gereinigt werden, dass insbesondere bei gleichschnell rotierenden Rotoren alle nach innen weisenden Flächen der Abstreifer einer Welle in einem beliebigen Radialschnitt durch den Mischer in etwa den Achsabstand als Krümmungsradius aufweisen und konkav sind und von Abstreifern einer anderen benachbarten Welle gereinigt werden. Die Schmelze kann zur besseren Durchmischung über weitere Mischelemente geführt werden. Z.B. kann zwischen dem Vorrekator und dem Hochviskosreaktor ein statischer Mischer eingesetzt werden.

Zum Austragen der ausreagierten Cokondensate aus dem Hochviskosreaktor kommt eine Einwellenschnecke, eine Zweiwellenschnecke oder eine Zahnradpumpe zum Einsatz. Gegebenenfalls werden noch Additive und/oder Zuschlagsstoffe zugeführt und eingemischt. Die Einmischung der Zuschlagstoffe kann in dem Austragsaggregat oder in einem nachgeschalteten Statikmischer erfolgen. Die Schmelze wird über eine oder mehrere Düsen ausgeformt und mit einer Granuliervorrichtung nach dem Stand der Technik zerkleinert.

Durch das erfindungsgemäße Verfahren sind die entsprechenden Blockcokondensate in kurzen Reaktionszeiten erhältlich. Kurze Reaktionszeit meint in diesem Zusammenhang die Reaktionszeit, die benötigt wird, um das aufgeschmolzene Ausgangspolycarbonat bis zur Zielviskosität unter Einbau der Siloxan-Komponente herzustellen. Die Reaktionszeit beträgt bevorzugt weniger 1/2 Stunde, insbesondere bevorzugt weniger als 15 Minuten und ganz besonders bevorzugt weniger als 7,5 Minuten. In einer besonders bevorzugten Ausführungsform beträgt die Reaktionszeit weniger als 30 insbesondere bevorzugt weniger als 20 Minuten.

Das erfindungsgemäß einzusetzende Polycarbonat und das erfindungsgemäß einzusetzende (Poly)Siloxan kann mittels Katalysatoren zur Reaktion gebracht werden. Eine Reaktionsführung ist zwar auch ohne Katalysator prinzipiell möglich, jedoch müssen dann ggf. höhere Temperaturen und längere Verweilzeiten in Kauf genommen werden.

Für das erfindungsgemäße Verfahren geeignete Katalysatoren sind z.B.

Ammoniumkatalysatoren, wie beispielsweise Tetramethylammoniumhydroxid, Tetramethylammoniumacetat, Tetramethylammoniumfluorid, Tetramethylammoniumtetraphenylboranat, Dimethyldiphenylammoniumhydroxid, Tetraethylammoniumhydroxid, Cethyltrimethylammoniumtetraphenylboranat und Cethyltrimethylammoniumphenolat. Insbesondere geeignet sind Phosphoniumkatalysatoren der Formel (K): 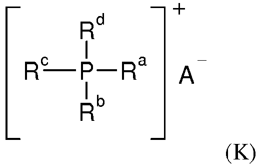 wobei Ra, Rb, Rc und Rd dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und X- ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C6-C14-Aryl, C7-C15-Arylalkyl oder C5-C6-Cycloalkyl, bevorzugt Phenyl sein kann.

Besonders bevorzugte Katalysatoren sind Tetraphenylphosphoniumchlorid, Tetraphenylphosphoniumhydroxid und Tetraphenylphosphoniumphenolat; ganz besonders bevorzugt ist Tetraphenylphosphoniumphenolat.Besonders bevorzugt werden die Alkalimetallsalze oder Erdalkalimetallsalze dieser Ammonium- und/oder Phosphoniumkatalysatoren eingesetzt.

Der Katalysator wird bevorzugt in Mengen von 0,0001 bis 1,0 Gew.-% bevorzugt von 0,001 bis 0,5 Gew.-% insbesondere bevorzugt von 0,005 bis 0,3 Gew.-% und ganz besonders bevorzugt von 0,01 bis 0,15 Gew.-% bezogen auf die Gesamtzusammensetzung eingesetzt.

Der Katalysator kann allein oder als Katalysatorgemisch eingesetzt werden und in Substanz oder als Lösung, beispielsweise in Wasser oder in Phenol (z.B. als Mischkristall mit Phenol), zugesetzt werden.

Ebenso ist es bevorzugt, dass das Polycarbonat und das (Poly)Siloxan in Anwesenheit eines organischen oder anorganischen Salzes einer schwachen Säuren mit einem pK_{A}-Wert im Bereich von 3 bis 7 (25 °) zur Reaktion gebracht werden. Dieses Salz kann auch als Co-Katalysator bezeichnet werden. Geeignete schwache Säure umfassen Carbonsäuren, bevorzugt C2-C22-Carbonsäuren wie beispielsweise Essigsäure, Propansäure, Ölsäure, Stearinsäure, Laurinsäure, Benzoesäure, 4-Methoxybenzoesäure, 3-Methylbenzoesäure, 4-tert-Butylbenzoesäure, p-Toluolessigsäure, 4-Hydroxybenzoesäure und Salicylsäure, Partialester von Polycarbonsäuren, wie beispielsweise Monoester der Bernsteinsäure, Partialester von Phosphorsäuren, wie beispielsweise mono-oder diorganische Phosphorsäureester, verzweigte aliphatische Carbonsäuren, wie beispielsweise 2,2-Dimethylpropionsäure, 2,2-Dimethylbutansäure, 2,2-Dimethylpentansäure und 2-Ethylhexansäure.

Geeignete organische oder anorganische Salz sind ausgewählt aus oder abgeleitet von Hydrogencarbonat, Kaliumhydrogencarbonat, Lithiumhydrogencarbonat, Natriumcarbonat, Kaliumcarbonat, Lithiumcarbonat, Natriumacetat, Kaliumacetat, Lithiumacetat, Natriumstearat, Kaliumstearat, Lithiumstearat, Natriumoleat, Kaliumoleat, Lithiumoleat, Natriumbenzoat, Kaliumbenzoat, Lithiumbenzoat, Dinatrium, Dikalium und Dilithiumsalze von Bisphenol A. Des Weiteren können die Salze Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat, Strontiumstearat und die entsprechenden Oleate umfassen. Die Salze können alleine oder in beliebigen Mischungen verwendet werden.

Besonders bevorzugt ist das Salz ausgewählt aus der Gruppe, bestehend aus Alkalimetallsalzen und Phosphoniumsalzen von Carbonsäuren. In einer weiteren bevorzugten Ausführungsform ist das organische oder anorganische Salz von einer Carbonsäure abgeleitet.

Die organischen oder anorganischen Salze werden bevorzugt in Mengen von 0.5 to 1000 ppm, besonders bevorzugt von 1 bis 100 ppm und ganz besonders bevorzugt von 1 bis 10 ppm eingesetzt, basierend auf dem Gesamtgewicht des Siloxans und des organischen oder anorganischen Salzes. Bevorzugt werden die organischen oder anorganischen Salze in einer Menge von 0.0005 bis 5 mmol/kg, besonders bevorzugt 0.001 bis 1 mmol/kg und ganz besonders bevorzugt von 0.001 bis 0.5 mmol/kg eingesetzt, basierend auf dem Gesamtgewicht des Siloxans, des Polycarbonats und des organischen oder anorganischen Salzes.

In einer bevorzugten Ausführungsform ist das organische oder anorganische Salz ein Natriumsalz, bevorzugt ein Natriumsalz einer Carbonsäure. Hier wird es bevorzugt in einer solchen Menge eingesetzt, dass der Natriumgehalt in dem resultierenden Polysiloxan-Polycarbonat Blockcokondensat in Bereich von 0.1 ppm bis 1000 ppm, bevorzugt 0.2 bis 100 ppm, besonders bevorzugt 0.3 bis 10 ppm und insbesondere bevorzugt von 0.4 to 5 ppm liegt, basieren auf dem Gesamtgewicht des Polysiloxan-Polycarbonat Blockcokondesats, das gebildet werden soll. Der Natriumgehalt des Cokondensats kann beispielsweise durch Atomabsorptionsspektroskopie bestimmt werden.

Das organische oder anorganische Salz kann allein oder in beliebigen Mischungen eingesetzt werden. Es kann als Feststoff oder in Lösung zugegeben warden. In einer bevorzugten Ausführungsform wird das organische oder anorganische Salz in Form einer Mischung, enthaltend das Siloxan und das organische oder anorganische Salz, zugegeben.

Für das erfindungsgemäße Verfahren geeignete Katalysatoren sind die vorstehend genannten, die entweder mittels Masterbatch mit einem geeignetem Polycarbonat, insbesondere dem vorstehend beschriebenen erfindungsgemäßen Polycarbonat, in die Reaktion eingeführt werden oder getrennt davon bzw. noch zusätzlich hinzugefügt werden können.

Die Katalysatoren können allein oder im Gemisch eingesetzt werden und in Substanz oder als Lösung, beispielsweise in Wasser oder in Phenol, zugesetzt werden.

Bevorzugt wird der Katalysator in Reinform, als Gemisch oder im Masterbatch im Vorreaktor bevorzugt auf einem Doppelschneckenextruder zugegeben.

### Komponente A)

Polycarbonate im Sinne der vorliegenden Erfindung sind sowohl Homopolycarbonate als auch Copolycarbonate sowie Mischungen von Polycarbonaten. Die Polycarbonate können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Zur Herstellung des erfindungsgemäßen Polysiloxan-Polycarbonat-Blockcokondensats werden vorzugsweise Polycarbonate mit Molekulargewichten von 8.000 bis 28.000 g/mol, besonders bevorzugt von 10.000 bis 27.000 g/mol und insbesondere bevorzugt von 12.000 bis 26.500 g/mol eingesetzt. Vorzugweise weisen diese Polycarbonate einen Gehalt an phenolischen OH-Gruppen von 250 ppm bis 2500 ppm, bevorzugt 500 bis 2000, und insbesondere bevorzugt von 1000 bis 1800 ppm auf. Die phenolischen OH-Gruppen werden bevorzugt mittels IR-Spektroskopie bestimmt.

Die für die Bestimmung der für das Polycarbonat, die Siloxankomponente oder das Polysiloxan-Polycarbonat-Blockcokondensat im Rahmen der Erfindung angegebenen Molmassen verwendete Methode ist die Methode Nr. 2301-0257502-09D der Currenta GmbH & Co. OHG, die jederzeit bei der Currenta angefragt werden kann.

Des Weiteren ist es bevorzugt, dass zur Herstellung des erfindungsgemäßen Polysiloxan-Polycarbonat-Blockcokondensats Polycarbonate mit relativen Lösungsviskositäten von 1,10 bis 1,285 eingesetzt werden. Dabei wird die relative Lösungsviskosität (ηrel; auch als eta rel bezeichnet) bevorzugt in Dichlormethan bei einer Konzentration von 5 g/l bei 25 °C mit einem Ubbelohdeviskosimeter bestimmt.

Bevorzugte Diphenole zur Herstellung der Polycarbonate sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol. 1,1-Bis-(4-hydroxyphenyl)-cyclohexan und 1,1-Bis-(4-hydroxyphenyl)-3,3,5-trimethylcyclohexan.

Besonders bevorzugte Diphenole sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Insbesondere werden Polycarbonate auf Basis von Bisphenol A eingesetzt. Ganz besonders bevorzugt enthalten diese Polycarbonate Phenol als Endgruppe. Dabei sind insbesondere solche Polycarbonate zur Herstellung der erfindungsgemäßen Blockcokondensate geeignet, welche nach dem Schmelzeumesterungsverfahren hergestellt wurden.

Kommt das Reaktivextrusionsverfahren zur Herstellung der Blockcokondensate zum Einsatz werden in einer bevorzugten Ausführungsform Polycarbonate eingesetzt, welche bestimmte Umlagerungsstrukturen enthalten. Die in dieser Ausführungsform einzusetzenden Polycarbonate enthalten mindestens eine, bevorzugt mehrere der folgenden Strukturen (4) bis (7): 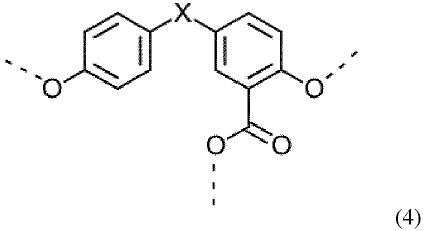 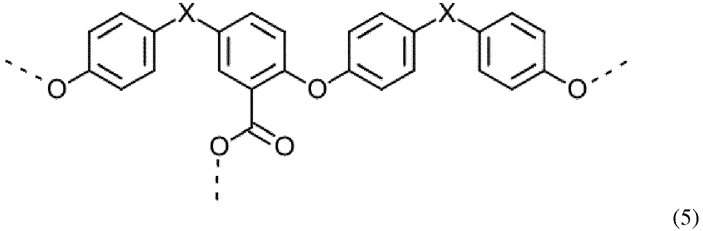 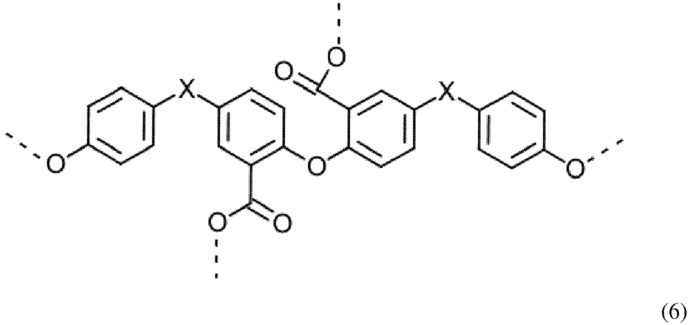 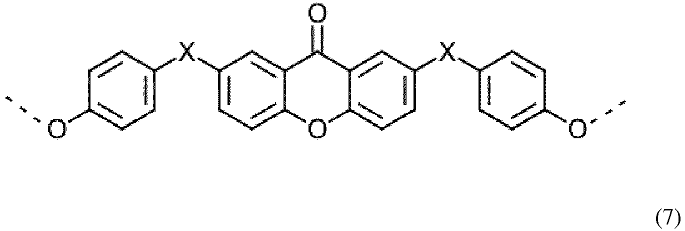 in denen die Phenylringe unabhängig voneinander ein- oder zweifach mit C1 - C8 Alkyl, Halogen, bevorzugt C1 bis C4 Alkyl, besonders bevorzugt mit Methyl substituiert sein können und X für eine Einfachbindung, C1 bis C6 Alkylen, C2 bis C5 Alkyliden oder C5 bis C6 Cycloalkyliden, bevorzugt für eine Einfachbindung oder C1 bis C4 Alkylen und insbesondere bevorzugt für Isopropyliden stehen, wobei die Menge der Struktureinheiten (4) bis (7) in Summe (bestimmt nach Verseifung) im Allgemeinen im Bereich von 50 bis 1000 ppm, bevorzugt im Bereich von 80 bis 850 ppm beträgt.

Darüber hinaus sind Polycarbonate bevorzugt, welche als Endgruppen Phenol tragen (Phenyl-terminiertes Polycarbonat). Tert. Butylphenol sowie Cumylphenol sind weitere mögliche Endgrupen.

Um die Menge der Umlagerungsstrukturen zu bestimmen, wird das jeweilige Polycarbonat einer Totalverseifung unterzogen und so die entsprechenden Abbauprodukte der Formeln (4a) bis (7a) gebildet, deren Menge mit HPLC bestimmt wird (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (1a) bis (4a) mittels HPLC mit UV-Detektion bestimmt):

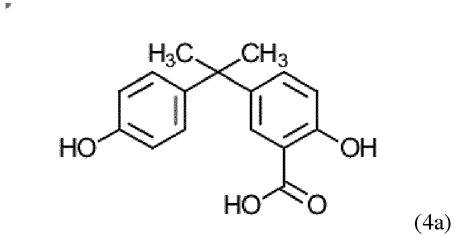

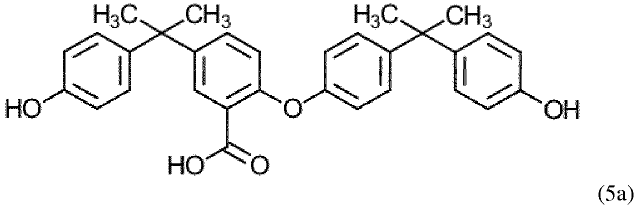

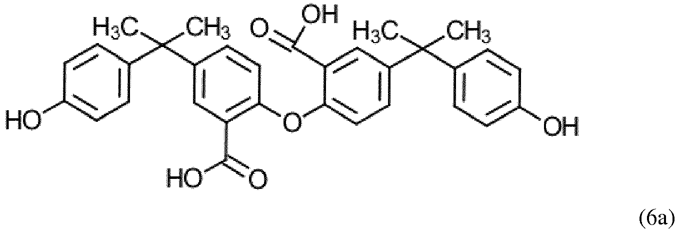

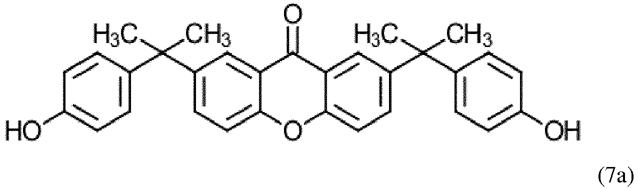

Bevorzugt beträgt die Menge der dabei freigesetzten Verbindung der Formel (4a) 20 bis 800 ppm besonders bevorzugt 25 bis 700 ppm und insbesondere bevorzugt 30 bis 500 ppm.

Bevorzugt beträgt die Menge der dabei freigesetzten Verbindung der Formel (5a) 0 (d.h. unterhalb der Nachweisgrenze von 10 ppm) bis 100 ppm besonders bevorzugt 0 bis 80 ppm und insbesondere bevorzugt 0 bis 50 ppm.

Bevorzugt beträgt die Menge der dabei freigesetzten Verbindung der Formel (6a) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm.

Bevorzugt beträgt die Menge der dabei freigesetzten Verbindung der Formel (7a) 0 (d.h. unterhalb der Nachweisgrenze von 10 ppm) bis 300 ppm bevorzugt 5 bis 250 ppm und insbesondere bevorzugt 10 bis 200 ppm.

Die Herstellung derartige Polycarbonate enthaltend die oben genannten Umlagerungsstrukturen ist beispielsweise in DE 102008019503 beschrieben.

### Komponente B)

### Komponente B ist bevorzugt ein Hydroxyarylterminiertes (Poly)Siloxan der Formel (1)

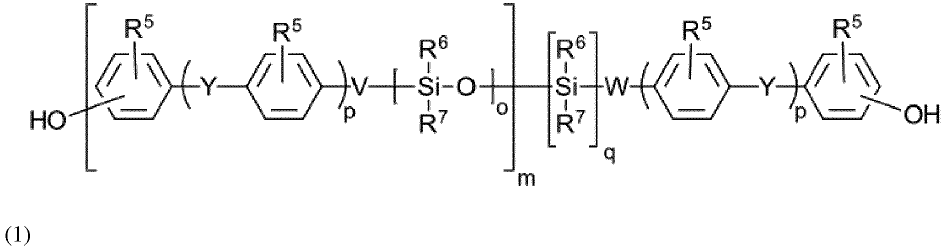

In der allgemeinen Formel (1) steht R⁵ für Wasserstoff oder C1 bis C4 Alkyl, C1 bis C4-Alkoxy, vorzugsweise für Wasserstoff oder Methyl, Methyloxy, besonders bevorzugt für Wasserstoff.

R⁶ und R⁷ stehen unabhängig voneinander für Aryl, bevorzugt Phenyl, C1 bis C4 Alkyl, vorzugsweise für Methyl, insbesondere für Methyl..

Y steht für eine Einfachbindung, -CO-, -O-, C₁- bis C₅-Alkylen, C₂ bis Cs-Alkyliden oder für einen C₅ bis C₆-Cycloalkylidenrest, der ein- oder mehrfach mit C₁ bis C₄-Alkyl substituiert sein kann, bevorzugt für eine Einfachbindung, -O-, Isopropyliden oder für einen C₅ bis C₆-Cycloalkylidenrest, der ein- oder mehrfach mit C₁ bis C₄-Alkyl substituiert sein kann, und insbesondere für Isopropyliden.

V steht für Sauerstoff, C2-C6 Alkylen oder C3- bis C6-Alkyliden, bevorzugt für Sauerstoff oder C3-Alkylen.

Wenn q = 0 ist, steht W für eine Einfachbindung.

Wenn q = 1 ist, steht W steht für Sauerstoff, C2 bis C6-Alkylen oder C3- bis C6-Alkyliden, bevorzugt für Sauerstoff oder C3-Alkylen.

p oder q stehen jeweils unabhängig für 0 oder 1.

o steht für eine durchschnittliche Anzahl von Wiederholungseinheiten von 10 bis 400, bevorzugt 10 bis 100, besonders bevorzugt 15 bis 50.

m steht für eine für eine durchschnittliche Anzahl von Wiederholungseinheiten von 1 bis 10, bevorzugt 1 bis 6, besonders bevorzugt 1,5 bis 5.

Insbesondere bevorzugt sind (Poly)Siloxane der Formeln (2) und (3) 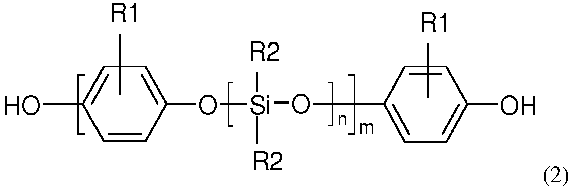 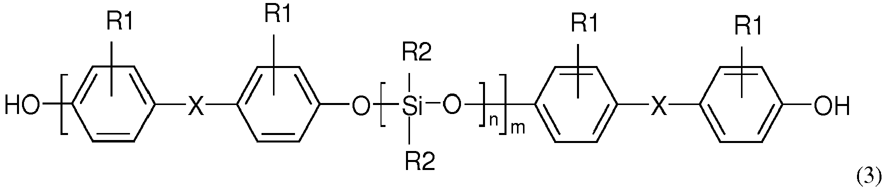 wobei R1 für Wasserstoff, C1-C4-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO2-, -CO-, -O-, -S-, C1- bis C6-Alkylen, C2- bis C5-Alkyliden oder für C6- bis C12-Arylen, welches gegebenenfalls mit weiteren Heteroatome enthaltenden aromatischen Ringen kondensiert sein kann, steht,
X bevorzugt für eine Einfachbindung, C1 bis C5-Alkylen, C2 bis C5-Alkyliden, C5 bis C12-Cycloalkyliden, -O-, -SO- -CO-, -S-, -SO2-, besonders bevorzugt steht X für eine Einfachbindung, Isopropyliden, C5 bis C12 Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 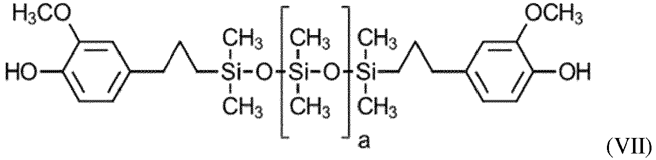 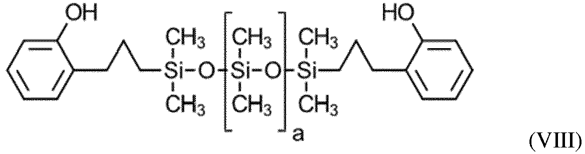 oder 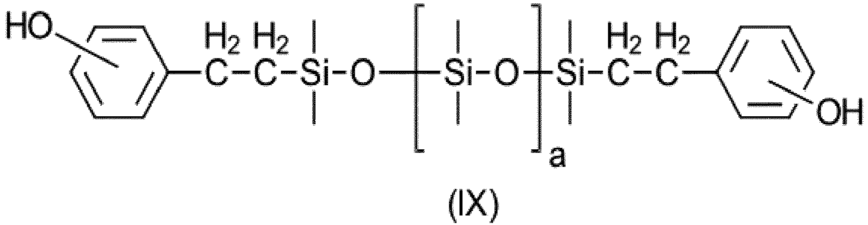 wobei a in Formel (VII), (VIII) und (IX) für eine durchschnittliche Zahl von 10 bis 400, bevorzugt 10 bis 100 und besonders bevorzugt für 15 bis 50 steht.

Das Molekulargewicht der Siloxankomponente beträgt bevorzugt 1.500 bis 20.000 g/mol und insbesondere bevorzugt 3500 - 15.000 g/mol. Das Molekulargewicht wird bevorzugt, wie oben unter Komponente A) beschrieben, bestimmt.

Die Herstellung der Siloxane der Formeln (1) bis (3) ist beispielsweise in DE 33 34 782 A1, DE 19710081 und WO 2015/05229 beschrieben.

Die Siloxankomponente der Formel (1), (2) oder (3) oder auch (VII), (VIII) oder (IX) werden von 0,5 bis 50 Gew.-%, bevorzugt von 1 bis 40 Gew.-%, insbesondere bevorzugt von 2 bis 20 % und ganz besonders bevorzugt von 2,5 bis 10 Gew.-%, jeweils bezogen auf die Komponenten A) und B), eingesetzt.

Die Herstellung der Siloxanblöcke ist prinzipiell bekannt und kann nach Verfahren wie beispielsweise in US20130267665 beschrieben hergestellt werden.

### Komponente C)

Erfindungsgemäß wird als Komponente C) mindestens ein Siloxan der allgemeinen chemischen Formel (I), (Ia) oder beliebige Mischungen davon eingesetzt, 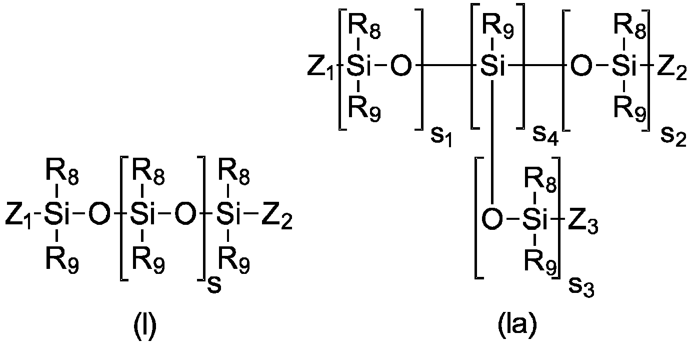 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alky, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
s, s₁, s₂, s₃ und s₄ jeweils unabhängig voneinander für eine natürliche Zahl zwischen 1 und 250, bevorzugt 1 bis 100, besonders bevorzugt 1 bis 75 stehen.

Diese erfindungsgemäße Komponente C) entspricht der erfindungsgemäßen Komponente (i) in der erfindungsgemäßen Polycarbonatzusammensetzung. Daher bezieht sich die folgende Beschreibung unabhängig voneinander auf beide erfindungsgemäßen Komponenten.

Es hat sich überraschenderweise herausgestellt, dass die Anwesenheit mindestens einer aliphatischen und mindestens einer aromatischen Gruppen in der Komponente C) beim Verfahren zur Herstellung eines Polysiloxan-Polycarbonat-Blockcokondensats zu einer deutlichen Verringerung der SiloxanDomänenverteilung führt und deutlich mehr Teilchen mit einem Teilchendurchmesser von kleiner 100 nm erhalten werden. Dies wird erfindungsgemäß durch die bessere Vermittlung zwischen Komponente A) und B) durch die Komponente C) hervorgerufen.

Die erfindungsgemäße Komponente C) bzw. (ii) ist linear und/oder weist eine kammartig und/oder pfropfartige Struktur auf.

Es ist bevorzugt, dass R₈ in der allgemeinen chemischen Formel (I) oder (Ia) jeweils unabhängig voneinander für Methyl, Ethyl, Propyl, Butyl, Isopropyl, Vinyl, Isobutyl, ein C5 bis C18-Alkyl oder ein gegebenenfalls mit Alkyl oder Alkoxy substituiertes Phenylethyl, Phenylisopropyl, 3-Phenylpropyl oder Phenyl steht und

R₉ in der allgemeinen chemischen Formel (I) oder (Ia) jeweils unabhängig voneinander für Methyl, Ethyl, Propyl, Butyl, Isopropyl, Isobutyl, Vinyl, ein C5 bis C18-Alkyl oder ein gegebenenfalls mit Alkyl oder Alkoxy substituiertes Phenylethyl, Phenylisopropyl, 3-Phenylpropyl oder Phenyl steht,

mit der Maßgabe, dass zumindest ein R₈ für Methyl, Ethyl, Propyl, Butyl, Isopropyl, Vinyl, Isobutyl oder ein C5 bis C18-Alkyl steht und zumindest ein R₉ für ein gegebenenfalls mit Alkyl oder Alkoxy substituiertes Phenylethyl, Phenylisopropyl, 3-Phenylpropyl oder Phenyl steht. Dabei ist es erfindungsgemäß bevorzugt, dass sich die gegebenenfalls vorhandene Substituierung mit einem Alkyl oder Alkoxy auf alle angegebenen Phenyle (d. h. Phenylethyl, Phenylisopropyl, 3-Phenylpropyl oder Phenyl) jeweils unabhängig beziehen. Besonders bevorzugt ist erfindungsgemäß, dass die gegebenenfalls vorhandene Substituierung des Phenylethyls, Phenylisopropyls, 3-Phenylpropyls oder Phenyls ein C1-C9 Alkyl, eine Methoxy-Gruppe oder ein Ethoxy-Gruppe ist. Ganz besonders bevorzugt handelt es sich bei dem gegebenenfalls mit Alkyl oder Alkoxy substituierten Phenylethyl, Phenylisopropyl, 3-Phenylpropyl oder Phenyl in sämtlichen Ausführungsformen dieser Erfindung um -CH₂CH₂CH₂(C₆R₅), - CH₂CH₂(C₆R₅),
-CH₂CH(CH₃)-(C₆R₅) oder -C₆R₅, wobei jedes R unabhängig voneinander ein H, Alkyl oder Alkoxy, bevorzugt C1 bis C9 Alkyl, eine Methoxy-Gruppe oder ein Ethoxy-Gruppe sein kann. Ganz besonders bevorzugt handelt es sich um -CH₂CH₂CH₂(C₆H₅), -CH₂CH₂(C₆H₅), -CH₂CH(CH₃)-(C₆H₅) oder -C₆H₅.

Dabei haben Z₁, Z₂ und Z₃ die oben genannten Bedeutungen. Bevorzugt stehen Z₁, Z₂ und Z₃ jeweils unabhängig voneinander für Methyl, Vinyl, Phenyl oder Hydroxy.

Besonders bevorzugt ist, dass R₈ in der allgemeinen chemischen Formel (I) oder (Ia) jeweils unabhängig voneinander für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht und R₉ in der allgemeinen chemischen Formel (I) jeweils unabhängig für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht, mit der Maßgabe, dass zumindest ein R₈ für Methyl oder Ethyl steht und zumindest ein R₉ für ein Trimethylphenyl oder Phenyl steht. Dabei haben Z₁, Z₂ und Z₃ die oben genannten Bedeutungen. Bevorzugt stehen Z₁, Z₂ und Z₃ jeweils unabhängig voneinander für Methyl, Vinyl, Phenyl oder Hydroxy.

Bei den Gruppen R₈ und R₉ handelt es sich gemeinsam mit der Si-O-Gruppe um eine Gruppe, welche eine für den Fachmann bekannte "D"-Einheit bilden. Besonders bevorzugte D-Einheiten werden ausgewählt aus den folgenden Strukturen: 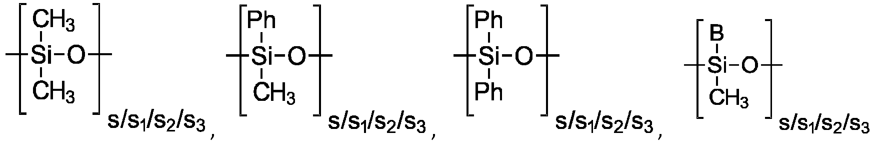 worin Ph jeweils unabhängig voneinander für -CH₂-CH₂-Phenyl, -CH₂-CH₂-CH₂-Phenyl, -CH₂-CH(CH₃)-Phenyl oder Phenyl steht und
B jeweils unabhängig für einander für ein C2 bis C18 Alkyl steht und die Anzahl der Wiederholungseinheiten s, s₁, s₂, s₃ und s₄ erfindungsgemäß definiert sind, je nachdem, ob die D-Einheit zur Strukturformel (I) oder (Ia) gehört. Der Fachmann ist in der Lage, diese D-Einheiten in die Strukturformel (I) oder (Ia) hinzulesen.

Ebenso ist für den Fachmann bekannt, dass die letzte Siloxan-Einheit gemeinsam mit den Endgruppen Z₁, Z₂ oder Z₃ eine "M"-Einheit bilden. Erfindungsgemäß bevorzugte M-Einheiten werden ausgewählt aus der Gruppe, bestehen aus 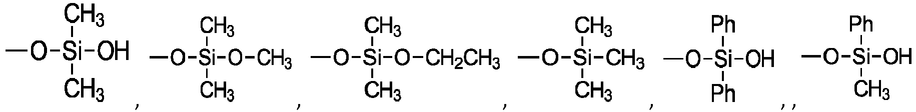 worin Ph jeweils unabhängig voneinander für -CH₂-CH₂-Phenyl, -CH₂-CH₂-CH₂-Phenyl, -CH₂-CH(CH₃)-Phenyl oder Phenyl steht. Der Fachmann ist in der Lage, diese M-Einheiten in die Strukturformel (I) oder (Ia) hinzulesen.

Ebenso ist dem Fachmann bekannt, dass die Struktur der Formel (Ia), welche von der Klammer mit dem Index s₄ umgeben ist, gemeinsam mit zwei Sauerstoffatomen eine "T"-Einheit bildet. Erfindungsgemäß ist der Rest R₉ an dieser T-Einheit ausgewählt aus der Gruppe, bestehend aus einer Methyl Gruppe und einer Ph-Gruppe, wobei Ph jeweils unabhängig voneinander für -CH₂-CH₂-Phenyl, -CH₂-CH₂-CH₂-Phenyl, -CH₂-CH(CH₃)-Phenyl oder Phenyl steht. Der Fachmann ist in der Lage, diese T-Einheiten in die Strukturformel (Ia) hinzulesen.

In all diesen Bevorzugungen ist es bevorzugt, dass s, s₁, s₂, s₃ und s₄ jeweils unabhängig voneinander für in der allgemeinen Formel (I) eine natürliche Zahl zwischen 3 und 50 bevorzugt zwischen 4 und 25 insbesondere bevorzugt zwischen 5 und 15 stehen. Dabei kann es sich um Reinstoffe oder Oligomergemische handeln. Handelt es sich um ein Oligomergemisch stellen s, s₁, s₂, s₃ und s₄ somit Mittelwerte der Verteilung und somit eine durchschnittliche Zahl dar. In diesem Fall können s, s₁, s₂, s₃ und s₄ auch eine Dezimalzahl sein.

Insbesondere ist es bevorzugt, dass die Komponente C) eine Mischung aus wenigstens einem Siloxan der Formel (I) und wenigstens einem Siloxan der Formel (Ia) ist. Dabei ist es bevorzugt, dass das mindestens eine Siloxan der Formel (Ia) bis zu 10 Gew.-%, bevorzugt 1 bis 5 Gew.-%, ganz besonders bevorzugt 2 bis 4 Gew.-%, bezogen auf das Gesamtgewicht aller Siloxane der Formel (I) und (Ia) in der Mischung enthalten ist.

Weiterhin ist es bevorzugt, dass das wenigstens eine Siloxan der Komponente (ii) bzw. der Komponente C) dargestellt wird durch die allgemeine chemische Formel (II), die allgemeine chemische Formel (IIa), die allgemeine chemische Formel (III) und/oder die allgemeine chemische Formel (IV) 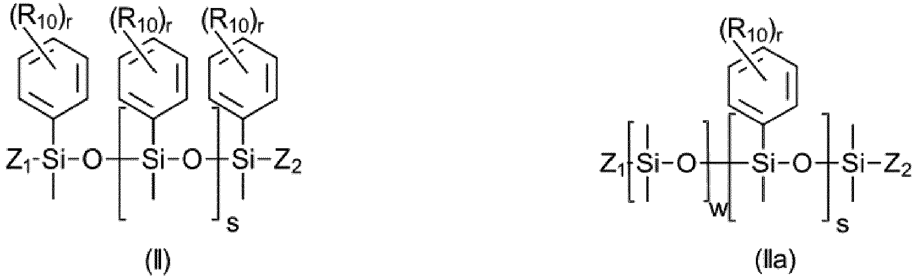 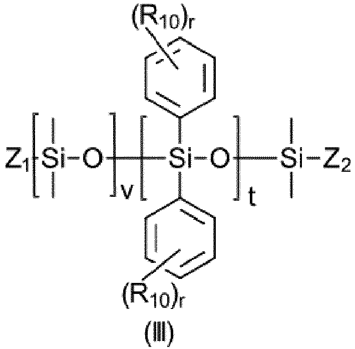 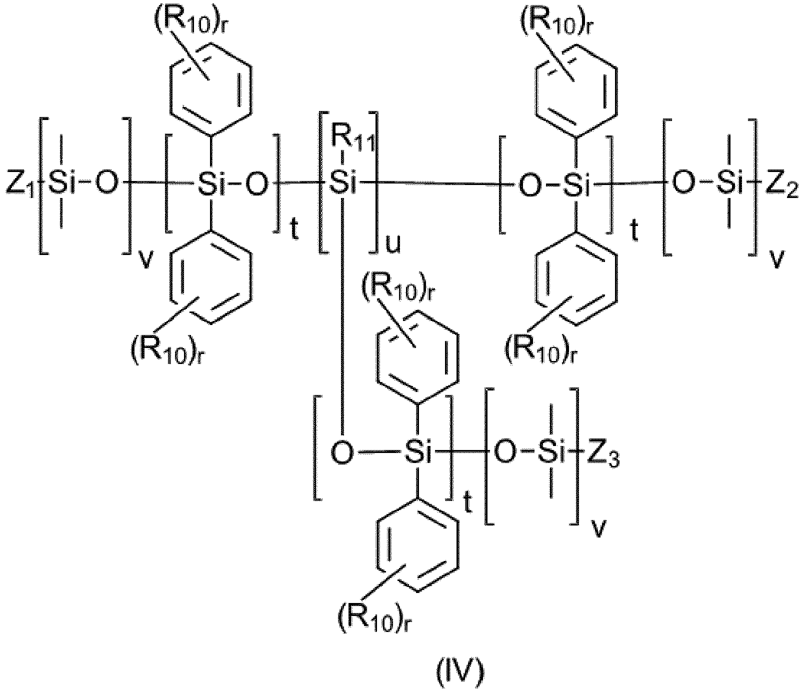 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl;, Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN, bevorzugt Methyl, Methoxy, Ethoxy, Wasserstoff oder Hydroxy stehen,
R₁₀ jeweils unabhängig voneinander für Wasserstoff, Methyl, Ethyl, Propyl, Butyl, Isopropyl, Isobutyl, Isooctyl, Isononyl oder Isodecyl steht,
R₁₁ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
r eine natürliche Zahl zwischen 0 und 3 ist,
s und t jeweils unabhängig eine natürliche Zahl zwischen 1 und 250, bevorzugt 1 bis 100, besonders bevorzugt 1 bis 75, ganz besonders bevorzugt 1 bis 50, ebenso bevorzugt zwischen 4 und 25, insbesondere bevorzugt zwischen 5 und 15 ist
w und v jeweils unabhängig eine natürliche Zahl zwischen 1 und 250, bevorzugt zwischen 1 und 100, insbesondere bevorzugt zwischen 5 und 75 ist und

Gruppen mit den Indizes s, w, v, t und u statistisch verteilt im Siloxan der Komponente (ii) bzw. der Komponente C) verteilt vorliegen können, bevorzugt statistisch verteilt im Siloxan der Komponente (ii) bzw. der Komponente C) vorliegen.

Dabei ist es insbesondere bevorzugt, dass die die Komponente (ii) bzw. die Komponente C) eine Mischung aus mindestens einem Siloxan ausgewählt aus der Gruppe, bestehend aus der allgemeinen chemischen Formel (II), (IIa) und (III) und bis zu 5 Gew.-% eines Siloxans der Formel (Ia), bevorzugt der Formel (IV) ist..

Insbesondere ist es bevorzugt, dass in den allgemeinen chemischen Formeln (II), (IIa). (III) und (IV)
Z₁, Z₂ und Z₃ jeweils unabhängig voneinander für Methyl, Vinyl, Methoxy, Ethoxy, Wasserstoff oder Hydroxy, bevorzugt Methyl, Hydroxy oder eine Mischung von Methoxy und Ethoxy stehen,
R₁₀ für Wasserstoff oder Methyl steht,
R₁₁ jeweils unabhängig voneinander für Methyl, Phenyl, Vinyl, Methoxy, Ethoxy, Wasserstoff oder Hydroxy, bevorzugt Methyl oder Phenyl steht,
r eine natürliche Zahl zwischen 0 und 3, besonders bevorzugt 0 ist,
s eine natürliche Zahl zwischen 1 und 100, bevorzugt 5 und 75, besonders bevorzugt zwischen 5 und 15 ist
t eine natürliche Zahl zwischen 1 und 75 ist
w eine natürliche Zahl zwischen 5 und 75 ist,
v eine natürliche Zahl zwischen 1 und 75 ist und
u eine natürliche Zahl zwischen 1 und 10 ist. Dabei ist es erfindungsgemäß bevorzugt, dass der Ausdruck "eine natürliche Zahl zwischen" einem Zahlenbereich, die explizit offenbarten Grenzwerte des Bereichs mit einschließt.

Ganz besonders ist es bevorzugt, dass in den allgemeinen chemischen Formeln (II), (IIa), (III) und (IV)
Z₁, Z₂ und Z₃ jeweils unabhängig voneinander Hydroxy stehen,
R₁₀ für Wasserstoff steht,
R₁₁ jeweils unabhängig voneinander für MEthyl oder Phenyl stehen,
r 0 ist,
s eine natürliche Zahl zwischen 1 und 100, bevorzugt 5 und 75, besonders bevorzugt zwischen 5 und 15 ist
t eine natürliche Zahl zwischen 1 und 75 ist
w eine natürliche Zahl zwischen 5 und 75 ist,
v eine natürliche Zahl zwischen 1 und 75 ist und
u eine natürliche Zahl zwischen 1 und 10 ist.Dabei ist es ganz besonders bevorzugt, dass die die Komponente (ii) bzw. die Komponente C) eine Mischung aus mindestens einem Siloxan ausgewählt aus der Gruppe, bestehend aus der allgemeinen chemischen Formel (II), (IIa) und (III) und >= 0 Gew.-% bis 53 Gew.-%, bevorzugt >= 0 Gew.-% bis 3 Gew.-% eines Siloxans der Formel (Ia), bevorzugt der Formel (IV) ist.

Das erfindungsgemäße Verfahren ist vor allem dadurch gekennzeichnet, dass der Reaktionsschmelze Komponente C) bevorzugt 0,01 bis 20 Gew.-%, besonders bevorzugt 0,01 bis 10 Gew.-%, insbesondere bevorzugt 0,05 bis 2,5 Gew.-%, weiterhin bevorzugt 0,1 bis 2,0 ganz besonders bevorzugt 0,20 bis 1,0 % bezogen auf die Gesamtzusammensetzung (Summe aus Komponente A bis C) zugesetzt wird. Der Zusatz kann an beliebiger Stelle des Verfahrens zu einem beliebigen Zeitpunkt erfolgen. Bevorzugt wird die Komponente C) zu einem frühen Zeitpunkt dem Reaktionsgemisch zugesetzt. Die Komponente C wird bevorzugt in Komponente B, bevorzugt unter Einsatz von Rühraggregaten und Wärme gelöst und der Polycarbonatschmelze als Gemisch zugesetzt. Die Komponente C) kann auch vor Zugabe der Komponente B) und/oder der Komponente A) zugesetzt werden. Z.B. kann die Komponente C) auch zu Beginn der Reaktion zusammen mit dem Polycarbonat aufgeschmolzen werden bzw. bei einer Reaktivextrusion zusammen mit Polycarbonat plastifiziert werden.

Die Komponente C) kann dabei direkt oder in Form eines Masterbatches eingebracht werden. Die Komponente C) kann mit weiteren Komponenten, wie z.B. einem Katalysator - z.B. entsprechend der Struktur (K) - vermischt werden. Als Substratmaterial für den Masterbatch kommt z.B. Polycarbonat in Frage, insbesondere Polycarbonat gemäß der Komponente A) genannt.

Es ist bevorzugt, dass Komponente C) als ein Masterbatch enthaltend
0,5 bis 99,9 Gew.-Teile Komponente C)
0,1 bis 99,5 Gew.-Teile Polycarbonat als Komponente C3
0 bis 1 Gew.-Teile eines Phosphoniumkatalysators als Komponente C4
eingesetzt wird.

Es ist ebenso bevorzugt, dass im erfindungsgemäßen Verfahren 50,0 bis 0,5 Gew.-% Polycarbonat gemäß Komponente A) und mit 0,5 bis 50,0 Gew.-% hydroxyarylterminierte Polysiloxans gemäß Komponente B) bezogen auf die Menge an A) und B) eingesetzt wird. Besonders bevorzugt ist es, dass 98,0 bis 80,0 Gew.-% Polycarbonat gemäß Komponente A) und mit 2,0 bis 20,0 Gew.-% hydroyarylterminierte Polysiloxan gemäß Komponente B) bezogen auf die Menge an A) und B) eingesetzt wird.

Erfindungsgemäß wird in einem anderen Aspekt eine Polycarbonatzusammensetzung bereitgestellt, enthaltend
(i) wenigstens ein Polysiloxan-Polycarbonat-Blockcokondensat,
(ii) wenigstens ein Siloxan der allgemeinen chemischen Formel (I), (Ia) oder beliebige Mischungen davon, 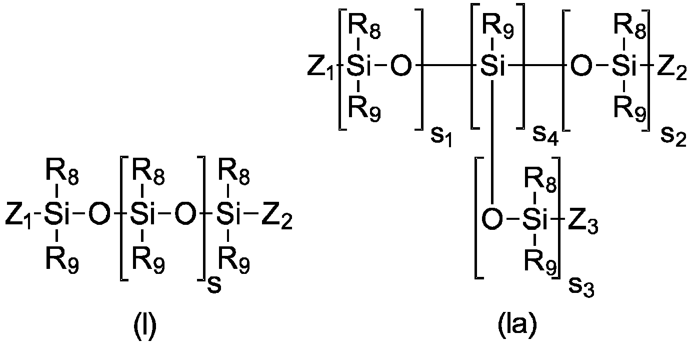 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, Phenyl, Hydroxy, Wasserstoff, Chlor, Fluor oder CN stehen,
   R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
   s, s₁, s₂, s₃ und s₄ jeweils unabhängig voneinander für eine natürliche Zahl zwischen 1 und 250 stehen,
(iii) optional mindestens ein weiteres Polymer, welches von Komponente (i) verschieden ist, und
(iv) optional mindestens ein weiteres Additiv.

### Komponente (i)

Das Polysiloxan-Polycarbonat-Blockcokondensat ist bevorzugt aus den folgenden Struktureinheiten (X1) und (X2) aufgebaut: 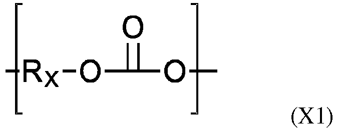
wobei Rₓ ein divalenter substituierter oder unsubstituierter aromatischer Rest, ein divalenter linearer oder cyclischer aliphatischer Rest
oder die Struktureinheit (X1) eine Mischung aus Bausteinen ist, wobei Rx ein divalenter substituierter oder unsubstituierter aromatischer Rest bzw. Rx ein divalenter linearer oder cyclischer aliphatischer Rest ist.
und der Struktureinheit (X2) 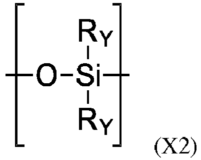 wobei Ry unabhängig voneinander ein linearer oder verzweigter aliphatischer Rest, bevorzugt C1-C12 Alkyl, besonders bevorzugt C1 bis C4 Alkyl, insbesondere Methyl, oder ein substituierter oder unsubstituierter aromatischer Rest, bevorzugt Phenyl, ist.

Der Anteil an aromatischen Rx Resten in der Formel (X1) beträgt 60 - 100 Gew.% und der Anteil an aliphatischen Resten 0 - 40 Gew.%, bezogen auf die Summe eingesetzten Diphenole in Gew.%. Das SiCoPc kann bevorzugt aus Siloxanblöcken aufgebaut sein, welche sich aus der oben angegebenen Formel (1) ableiten lassen.

Der Begriff "ableiten lassen" in diesem Zusammenhang bedeutet erfindungsgemäß bevorzugt, dass der entsprechende Baustein über die Hydroxylgruppen in das entstehende Polymer eingeestert werden. Dabei steht in der allgemeinen Formel (1) R⁵ für Wasserstoff oder C1 bis C4 Alkyl, vorzugsweise für Wasserstoff oder Methyl, , besonders bevorzugt für Wasserstoff. R⁶ und R⁷ stehen unabhängig voneinander für C1 bis C4 Alkyl, vorzugsweise für Methyl.

Y steht für eine Einfachbindung, -CO-, -O-, C₁- bis C₅-Alkylen, C₂ bis Cs-Alkyliden oder für einen C₅ bis C₆-Cycloalkylidenrest, der ein- oder mehrfach mit C₁ bis C₄-Alkyl substituiert sein kann, bevorzugt für eine Einfachbindung, -O-, Isopropyliden oder für einen C₅ bis C₆-Cycloalkylidenrest, der ein- oder mehrfach mit C₁ bis C₄-Alkyl substituiert sein kann, und insbesondere für Isopropyliden.

V steht für Sauerstoff, C2-C6 Alkylen oder C3- bis C6-Alkyliden, bevorzugt für Sauerstoff oder C3-Alkylen.

Wenn q = 0 ist steht W für eine Einfachbindung und
wenn q = 1 ist steht W für Sauerstoff, C2 bis C6-Alkylen oder C3- bis C6-Alkyliden, bevorzugt für Sauerstoff oder C3-Alkylen steht,

P und q stehen jeweils unabhängig voneinander für 0 oder 1.

o steht für eine durchschnittliche Anzahl von Wiederholungseinheiten von 10 bis 400, bevorzugt 10 bis 100, besonders bevorzugt 15 bis 50.

m steht für eine für eine durchschnittliche Anzahl von Wiederholungseinheiten von 1 bis 10, bevorzugt 1 bis 6, besonders bevorzugt 1,5 bis 5.

Insbesondere bevorzugt resultiert der Siloxan-Block des SiCoPCs der Komponente (i) aus Siloxanen der oben angebenen Formeln (2) und (3),
wobei R1 für Wasserstoff, C1-C4-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO2-, -CO-, -O-, -S-, C1- bis C6-Alkylen, C2- bis C5-Alkyliden oder für C6- bis C12-Arylen, welches gegebenenfalls mit weiteren Heteroatome enthaltenden aromatischen Ringen kondensiert sein kann, steht,
X bevorzugt für eine Einfachbindung, C1 bis C5-Alkylen, C2 bis C5-Alkyliden, C5 bis C12-Cycloalkyliden, -O-, -SO- -CO-, -S-, -SO2-, besonders bevorzugt steht X für eine Einfachbindung, Isopropyliden, C5 bis C12 Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 10 bis 50 bedeutet und
m für eine durchschnittliche Zahl von 1 bis 10, bevorzugt von 1 bis 6 und insbesondere bevorzugt von 1,5 bis 5 steht.

Wie bereits oben ausgeführt, handelt es sich bei der Komponente (i) bevorzugt um das durch das erfindungsgemäße Verfahren hergestellte Polysiloxan-Polycarbonat-Blockcokondensat.

Es ist bevorzugt, dass das Polysiloxan-Polycarbonat-Blockcokondensat einen D90 Wert der Siloxan-Domänengröße von kleiner als 120 nm, bevorzugt kleiner als 110 nm, und insbesondere bevorzugt kleiner 100 nm aufweist. Ebenso ist es bevorzugt, dass der Anteil an Teilchen mit einem Durchmesser kleiner 100 nm größer 70 % insbesondere bevorzugt größer 80 % und ganz besonders bevorzugt größer 90 % bezogen auf die Gesamtzahl der Siloxandomänen ist. Dabei wird der D90 Wert und/ider der Anteil an Teilchen mit einem Durchmesser von kleiner 100 nm bestimmt mittels AFM. Bevorzugt werden dazu die im Beispielteil beschrieben Parameter und das dort beschriebene Verfahren verwendet. In einer weiteren Ausführungsform kann der Siloxanblock des Polysiloxan-Polycarbonat-Blockcokondensats folgende Struktur (IVa) haben 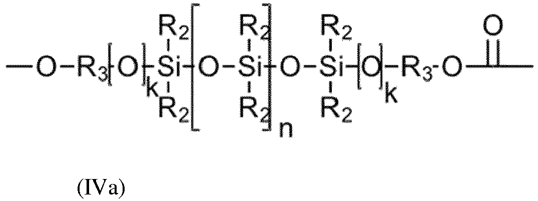 Wobei R2 die oben genannte Bedeutung hat,
n eine durchschnittliche Zahl von 10 bis 400, bevorzugt 10 bis 100, besonders bevorzugt 15 bis 50,
k für 0 oder 1 steht.
R3 umfasst unabhängig voneinander folgende Strukturelemente (V) oder (VI): 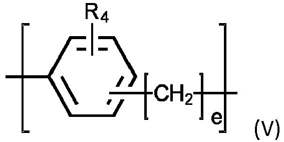 wobei R4 unabhängig voneinander Wasserstoff, Halogen und/oder jeweils ein C1 bis C10, bevorzugt C1 bis C4, linearer oder verzweigter, unsubstituierter oder ein- bis vierfach substituierter Alkylrest oder Alkoxyrest ist, bevorzugt sind die Alkyl- und Alkoxyreste unsubstituiert, insbesondere bevorzugt ist R4 Wasserstoff,
e 0 oder eine natürliche Zahl von 2 bis 12, bevorzugt 2 bis 6 ist, wobei im Falle, dass e gleich 0 ist, k gleich 1 ist,
oder einem Strukturelement der Formel (VI) 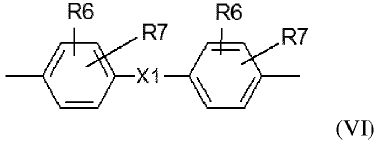 in der
R6 und R7 unabhängig voneinander für H, C1-C18-Alkyl, C1-C18-Alkoxy, Halogen wie Cl oder Br oder für jeweils gegebenenfalls substituiertes Aryl- oder Aralkyl, bevorzugt unabhängig voneinander für H oder C1-C12-Alkyl, besonders bevorzugt für H oder C1-C8-Alkyl und ganz besonders bevorzugt unabhängig voneinander für H oder Methyl stehen, und
X1 für -CO- , -0- , -S-, C1- bis C6-Alkylen, C2- bis C5-Alkyliden, C6 bis C10-Cycloalkyliden oder für C6- bis C12-Arylen, welches gegebenenfalls mit weiteren Heteroatome enthaltenden aromatischen Ringen kondensiert sein kann, steht.
Bevorzugt steht X1 für Cl bis C5-Alkylen, C2 bis C5-Alkyliden, C6 bis C9-Cyclohexyliden -O-, -SO- , -CO- , -S- , -SO2-, besonders bevorzugt für Isopropyliden, 3,3,5-trimethylcyclohexyliden oder Sauerstoff, insbesondere für Isopropyliden.

Beispielsweise und bevorzugt kann der Siloxanblock von folgender Struktur abgeleitet sein 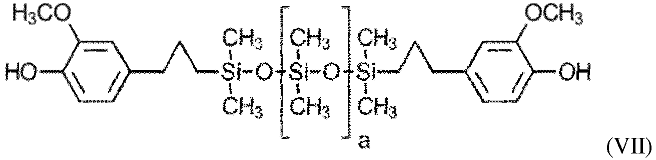 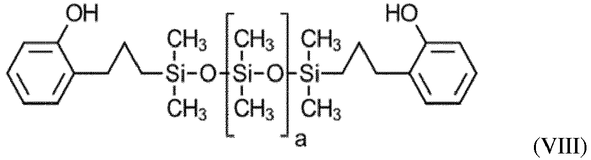 oder 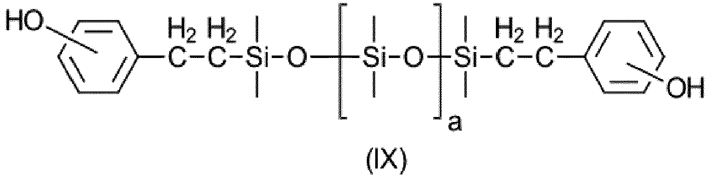 wobei a in Formel (VII), (VIII) oder (IX) für eine durchschnitttliche Zahl von 10 bis 400, bevorzugt 10 bis 100 und besonders bevorzugt für 15 bis 50 steht.

In einer weiteren Ausführungsform können die oben genannten Siloxanblöcke einfach oder mehrfach über Terephthalsäure oder Isophthalsäure verknüpft sein zu folgenden beispielhaft gezeigten Strukturelementen 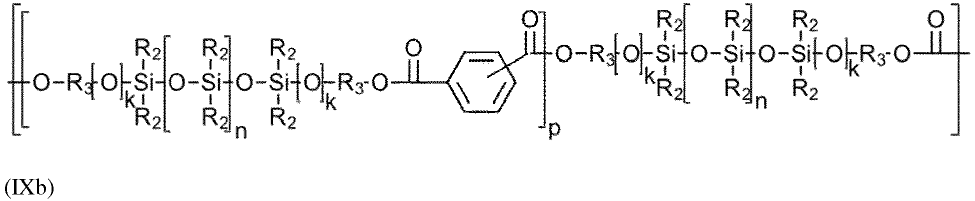 Wobei p für 0 oder 1 steht,
R2, R3, n und k die oben bei dem Strukturelement (IVa) angegebene Bedeutung haben.

Entsprechende Siloxanblöcke zur Umsetzung mit Polycarbonat oder zur Umsetzung mit Diphenolen abgeleitet von der Formel (III) oder (IIIa) mit Phosgen oder Diarylcarbonaten weisen jeweils terminal phenolische OH Gruppen auf. D.h. 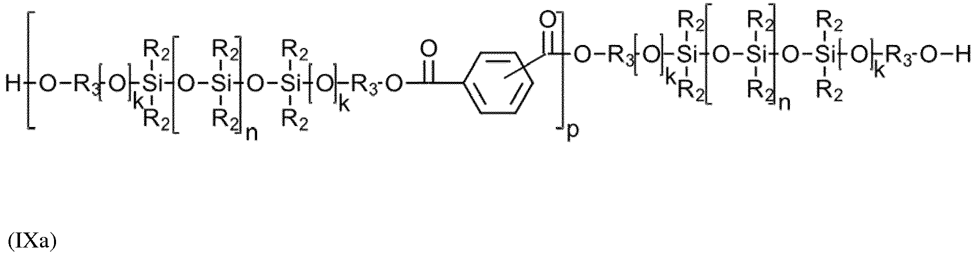 wobei R2, R3, n, k und p die bei dem Strukturelement (IXb) angegebene Bedeutungen haben.

### Komponente (ii)

Die erfindungsgemäße Komponente (ii) wurde bereits oben unter Komponente C) näher definiert.

### Komponente (iii)

Bei Komponente (iii) handelt es sich um mindestens ein weiteres Polymer, welches von Komponente (i) verschieden ist. Bevorzugt handelt es sich dabei um ein Polycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona). Besonders bevorzugt ist Komponente (iii) ein Polycarbonat. Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die Polycarbonate einschließlich der thermoplastischen, aromatischen Polyestercarbonate haben bevorzugt mittlere Molekulargewichte M_{w} (ermittelt durch Messung der relativen Viskosität bei 25°C in CH₂Cl₂ und einer Konzentration von 0,5 g pro 100 ml CH₂Cl₂) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

### Komponente (iv)

Optional kann als Komponente (iv) mindestens ein weiteres Additiv in der erfindungsgemäßen Polymerzusammensetzung vorhanden sein. Bei diesem mindestens einem Additiv kann es sich um Additive und/oder Füll- und Verstärkungsstoffe handeln. Diese Additive und/oder Füll- und Verstärkungsstoffe können in Mengen von 0,0 Gew.-% bis 5,0 Gew.-%, bevorzugt 0,01 Gew.-% bis 1,00 Gew.-% bezogen auf die Summe der Komponenten (i) bis (iv) zugemischt werden. Mögliche Additive sind ausgewählt aus mindestens einem aus der Gruppe der Flammschutzmittel, UV-Schutzmittel, Gammastabilisatoren, Antistatika optische Aufheller, Fließverbesserer, Thermostabilisatoren, anorganischen Pigmente, Entformungsmittel und Verarbeitungshilfsmittel.

Bei den Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben.

Diese Additive können einzeln oder in beliebigen Mischungen oder mehreren verschiedenen Mischungen der Polymerschmelze zugesetzt werden. Dies kann direkt bei der Isolierung des Polymeren (z.B. über ein Seitenaggregat wie Seitenextruder) als reine Substanz oder in Form eines Masterbatches dem Polycarbonat zugeführt werden oder aber nach Aufschmelzung des Polycarbonatgranulats in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

In einer bevorzugten Ausführungsform enthält die Polymerzusammensetzung Thermo- bzw. Verarbeitungsstabilisatoren. Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldi-phosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphorinan, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit- 3-(4-hydroxy-3,5-di-tert-butylphenyl)propionat; CAS: 6683-19-8) und Irganox 1076^{®} (2,6-Di-tert-butyl-4-(octadecanoxycarbonylethyl)phenol) eingesetzt.
Geeignete UV-Absorber sind beispielsweise beschrieben in der EP 1 308 084 A1, in der DE 102007011069 A1 sowie in der DE 10311063 A1.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxylphenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Die erfindungsgemäßen Polymerzusammensetzungen können optional Entformungsmittel enthalten Besonders geeignete Entformungsmittel für die erfindungsgemäße Zusammensetzung sind Pentaerythrittetrastearat (PETS) oder Glycerinmonostearat (GMS).

Bevorzugt umfasst die erfindungsgemäße Polycarbonatzusammensetzung
10 - 99,95, bevorzugt 50 - 99,5 insbesondere bevorzugt 80 - 99,5 Gew.-% der Komponente (i), in einer besonderen Ausführungsform 98,0 - 99,5 Gew.-% der Komponente (i)
0,05 bis 2,5 Gew.-%, bevorzugt 0,1 bis 2,0 insbesondere bevorzugt 0,20 bis 1,0 % der Komponente (ii)
0 bis 90 Gew.-%, bevorzugt 0 bis 50 Gew.-%, insbesondere bevorzugt 0 bis 20 Gew.-% der Komponente (iii) und
0 bis 15 Gew.-% der Komponente (iv).

Dabei beziehen sich die Gew.-% auf die Summe der Komponenten (i) bis (iv). Besonders bevorzugt besteht die Polycarbonatzusammensetzung aus den Komponenten (i) bis (iv). Dabei ergeben die Gew.-% 100 Gew.-%.Erfindungsgemäß bedeutet der Ausdruck "Polycarbonatzusammensetzung" bevorzugt, dass die Zusammensetzung mindestens 85 Gew.-% Polycarbonat umfasst, wobei das in Komponente (i) enthaltene Polycarbonat mitgerechnet wird. Dabei kann durch Komponente (iii) zusätzliches Polycarbonat, welches gegebenenfalls von Komponente (i) verschieden ist, in der Zusammensetzung enthalten sein.

Die nach dem erfindungsgemässen Verfahren erhältlichen Blockcokondensate und die erfindungsgemäßen Polycarbonatzusammensetzungen können in für thermoplastische Polycarbonate bekannter Weise zu beliebigen Formkörpern verarbeitet werden.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände (zusammengefasst als Formteil) überführt werden. Von Interesse ist auch die Verwendung in Mehrschichtsystemen. Das Aufbringen der erfindungsgemäß erhältlichen Zusammensetzung kann, z.B. bei einem Mehrkomponentenspritzguss oder als Substrat für eine Coex-Schicht eingesetzt werden. Das Aufbringen kann aber auch auf den fertig geformten Grundkörper geschehen, z.B. durch Lamination mit einem Film oder durch Beschichtung mit einer Lösung.

Platten beziehungsweise Formkörper aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Die nach dem erfindungsgemässen Verfahren erhältlichen Polysiloxan-Polycarbonat- Blockcokondensate und die erfindungsgemäßen Polycarbonatzusammensetzungen sind überall dort verwendbar, wo die bekannten aromatischen Polycarbonate bislang Verwendung finden und wo zusätzlich gute Fliessfähigkeit gepaart mit verbesserten Entformungsverhalten und hoher Zähigkeit bei niedrigen Temperaturen und verbesserter Chemikalienresistenz erforderlich sind, wie z. B. zur Herstellung grosser Kraftfahrzeug-Aussenteile und Schaltkästen für den Ausseneinsatz, von Platten, Hohlkammerplatten, von Teilen für Elektrik und Elektronik sowie von optischen Speichern. So können die Blockkokondensate im IT-Bereich für Computergehäuse und Multimediagehäuse, Mobiltelefonschalen sowie im Haushaltsbereich wie in Wasch- oder Spülmaschinen, im Sportbereich z.B. als Material für Helme eingesetzt werden.

In einem weiteren Aspekt der vorliegenden Erfindung wird eine Verwendung eines Siloxans der allgemeinen chemischen Formel (I), (Ia) oder beliebigen Mischungen davon 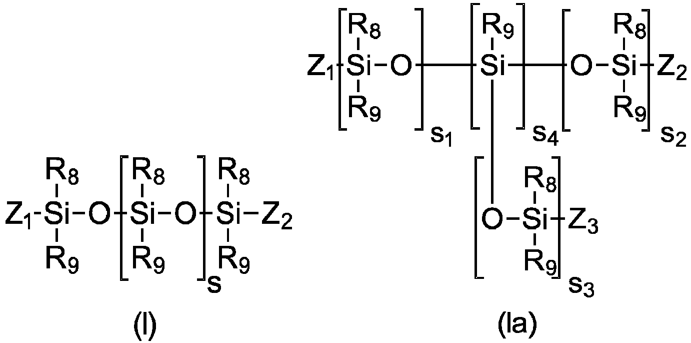 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, Phenyl, Hydroxy, Wasserstoff, Chlor, Fluor oder CN stehen,
R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
s, s₁, s₂, s₃ und s₄ jeweils unabhängig voneinander für eine natürliche Zahl zwischen 1 und 250 stehen,
bereitgestellt zur Reduzierung der Teilchengrößenverteilung der Siloxandomänen in einem Polysiloxan-Polycarbonat-Blockcokondensat bei einem Verfahren zur Herstellung dieses Polysiloxan-Polycarbonat-Blockcokondensats. Wie bereits oben ausgeführt, hat sich überraschenderweise herausgestellt, dass eine Verbindung der allgemeinen Formel (I) oder (Ia) besonders gut geeignet ist, zwischen den unterschiedlichen Phasen bei der Herstellung eines Polysiloxan-Polycarbonat-Blockcokondensats zu vermitteln und dadurch eine geringere Teilchengrößenverteilung der Siloxandomänen zu verursachen. Bevorzugt umfasst das Verfahren zur Herstellung des Polysiloxan-Polycarbonat-Blockcokondensats dabei mindestens eine Reaktivextrusion oder mindestens eine Schmelzeumesterung. Ganz besonders bevorzugt umfasst das Verfahren dabei eine Reaktivextrusion.

Das Siloxan der allgemeinen chemischen Formel (I) oder (Ia) wird oben unter Komponente C) (und auch Komponente (ii)) näher beschrieben. Diese Bevorzugungen gelten auch für die erfindungsgemäße Verwendung.

### Ausführungsbeispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### MVR

Die Bestimmung des Schmelzvolumenrate (MVR) erfolgt soweit nicht anders angegeben nach ISO 1133 (Jahr 2011) (bei 300 °C; 1,2 kg) soweit keine anderen Bedingungen beschrieben worden sind.

Lösungsviskosität

Bestimmung der Lösungsviskosität: Die relative Lösungsviskosität (r|rel; auch als eta rel bezeichnet) wurde in Dichlormethan bei einer Konzentration von 5 g/l bei 25 °C mit einem Ubbelohdeviskosimeter bestimmt.

### Auswertung der Siloxandomänengröße mittels Rasterkraftmikroskopie (AFM)

Die Siloxandomänengröße und Verteilung wurde mittels Rasterkraftmikroskopie ermittelt. Dazu wurde die entsprechende Probe (in Form eines Schmelzekuchens bei Laboransätzen bzw. Granulats bei Extrusionsansätzen) bei tiefer Temperatur (Stickstoffkühlung) mittels eines Ultramikrotoms angeschnitten. Es wurde ein Bruker D3100 AFM-Mikroskop verwendet. Das AFM Bild wurde bei Raumtemperatur aufgenommen (25 °C, 30 % relative Feuchte). Für die Messung wurde der "Soft Intermittent Contact Mode" oder der "Tapping Mode" benutzt. Für das Abrastern der Probe wurde ein "Tapping mode Cantilver" (Nanoworld pointprobe) mit einer Federkonstante von ca. 2,8 Nm-1 und einer Resonanzfrequenz von ca. 75 kHz verwendet. Die Tapping-Kraft wird durch das Verhältnis von Sollwert-Amplitude und freier Schwingungsamplitude (Amplitude der Tastspitze bei freier Schwingung in Luft) kontrolliert. Die Abtastrate wurde auf 1 Hz eingestellt. Zur Aufnahme der Oberflächenmorphologie wurden auf einer 2,5 µm x 2.5 µm Fläche Phasenkontrast- und Topographiebilder aufgenommen. Die Partikel bzw. Siloxandomänen wurden automatisch durch eine Bildauswertungsoftware Olympus SIS (Olympus Soft Imaging Solutions GmbH, 48149, Münster, Deutschland) über Hell-Dunkelkontrast ausgewertet (aus den Phasenkontrastbildern). Die Durchmesser der Partikel wurden über den Durchmesser des entsprechenden flächengleichen Kreises der längsten Ausdehnungsstrecke des Partikels bestimmt.

Mehrere Phasenkontrastaufnahmen (Anzahl der Teilchen größer 200) werden wie oben beschrieben ausgewertet. Über die Bildauswertungssoftware werden die Einzeldurchmesser klassifiziert und eine Verteilung der Durchmesser erstellt. Damit erfolgt die Zuordnung zu den einzelnen D-Werten. Der D-Wert gibt den Anteil an Teilchen an, die kleiner als der angegebene Wert ist. Bei einem D90-Wert von x sind 90 % der Teilchen kleiner als x. Ferner wird aus der Verteilung der Anteil der Teilchen, welche kleiner als 100 nm sind, bestimmt.

### Einfluss der Zugabe der Komponente C)

### Ausgangsstoffe:

### Komponente A: Polycarbonat

**PC 1:** Als Ausgangsstoff für die Reaktivextrusion wird lineares Bisphenol-A-Polycarbonat mit Endgruppen basierend auf Phenol mit einer Lösungsviskosität von 1.17 (Beschreibung s.o.) eingesetzt. Dieses Polycarbonat enthält keine Additive wie UV-Stabilisatoren, Entformungsmittel oder Thermostabilisatoren. Die Herstellung des Polycarbonats erfolgte über einen Schmelzeumesterungsprozess wie in DE 102008019503 beschrieben. Das Polycarbonat weist einen Gehalt an phenolischen Endgruppen von 0,16 % auf.

### Koponente B: Siloxan

Bisphenol A-terminertes Polydimethylsiloxan der Formel 3 mit n von ca. 30 und m im Bereich von 3 bis 4 (R¹ = H, R² = Methyl, X = Isopropyliden), mit einem Hydroxy-Gehalt von 18 mg KOH/g und einer Viskosität von 400 mPas (23°C); das Siloxan ist mit Natriumoktanoat versetzt, der Natrium-Gehalt beträgt 2,5 ppm.

### Komponente C bzw. (ii):

Lineares oligomeres Siloxan der Formel (I) mit Z₁ und Z₂ = OH, R₈ = Methyl, R₉ = Phenyl mit s von im Mittel ca. 4 (oligomeres Gemisch mit Ketten von s = 2 bis ca. 10).

### Verfahren:

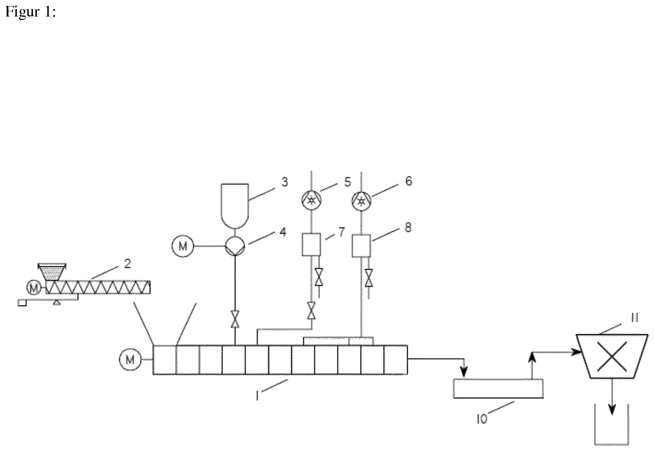

Das Schema des Versuchsaufbaus ist Figur 1 zu entnehmen.

Figur 1 zeigt ein Schema zur Herstellung der Siloxan-haltigen Blockcokondensate. Polycarbonat (Komponente A)) wird über die gravimetrische Zuführung (2) auf den Doppelschneckenextruder (1) dosiert. Der Extruder (Typ ZSE 27 MAXX von Fa. Leistritz Extrusionstechnik GmbH, Nürnberg) ist ein gleichsinnig drehender Zweischneckenextruder mit Vakuumzonen zur Abtrennung der Brüden. Der Extruder besteht aus 11 Gehäuseteilen (a bis k) - siehe Figur 1. Im Gehäuseteil a erfolgt die Zugabe von Polycarbonat über die Differentialdosierwaage (2) sowie im Gehäuse b und c das Aufschmelzen des polycarbonats. Im Gehäuseteil d erfolgt die Zugabe der flüssigen Siloxankomponente (Komponente B). Die Gehäuseteile d und e dienen außerdem der Einmischung der flüssigen Siloxankomponente (Komponente B). Die Gehäuseteile e, g, i und j sind mit Entgasungsöffnungen versehen, um die Kondensationsprodukte zu entfernen. Das Gehäuseteil e ist der ersten und die Gehäuseteile g i und j der zweiten Vakuumstufe zugeordnet. Das Vakuum in der ersten Vakuumstufe betrug zwischen 45 und 65 mbar Absolutdruck. Das Vakuum in der zweiten Vakuumstufe beträgt weniger als 1 mbar. Das Siloxan (Komponente B) wird in einem Tank (3) vorgelegt und über eine Dosierpumpe (4) auf den Extruder gegeben. Das Vakuum wird über die Vakuumpumpen (5) und (6) generiert. Die Brüden werden vom Extruder weggeführt und in 2 Kondensatoren aufgefangen (9). Der Schmelzestrang wird in ein Wasserbad (10) geführt und durch den Granulator (11) zerkleinert.

### Beispiel 1:

In einem Feststoffmischer wurde zur Vorbereitung Polycarbonat (Komponente A) mit 0,5% der Komponente C gemischt.

1,9 kg/h Polycarbonat (Komponente A) wurden über die gravimetrische Dosierung (2) in den Doppelwellenextruder (1) dosiert. Die Drehzahl des Extruders war auf 120 1/min eingestellt. 0,09 kg/h der Komponente B wurden über die Pumpe (4) in das Gehäuse (d) des Extruders eingespeist. Am Gehäuse (e) lag ein Vakuum von 55 mbar und an den Gehäusen (g), (i) und (j) lag jeweils ein Vakuum von 0,5 mbar an. Die Gehäuse (g) bis (k) wurden auf eine Temperatur von 350°C gebracht.

Das resultierende Polykondensat hatte eine helle Farbe und wies einen MVR von 2,1 auf. In einer AFM-Aufnahme der Ausdehnung 10 × 10 µm wurden 880 Objekte identifiziert, die einer weichen Phase und somit der Siloxanphase zugeordnet werden konnten. Die Größenverteilung der Objekte hatte einen D90-Durchmesser von 115 nm. Das größte identifizierte Objekt entsprach einem äquivalenten Kreisdurchmesser von 156 nm.

### Vergleichsbeispiel 2:

1,9 kg/h Polycarbonat (Komponente A) wurden über die gravimetrische Dosierung (2) in den Doppelwellenextruder (1) dosiert. Die Drehzahl des Extruders war auf 120 1/min eingestellt. 0,09 kg/h der Komponente B wurden über die Pumpe (4) in das Gehäuse (d) des Extruders eingespeist. Am Gehäuse (e) lag ein Vakuum von 63 mbar und an den Gehäusen (g), (i) und (j) lag jeweils ein Vakuum von 0,5 mbar an. Die Gehäuse (g) bis (k) wurden auf eine Temperatur von 325°C gebracht.

Das resultierende Polykondensat hatte eine helle Farbe und wies einen MVR von 4,4 auf. In einer AFM-Aufnahme der Ausdehnung 10 × 10 µm wurden 624 Objekte identifiziert, die einer weichen Phase und somit der Siloxanphase zugeordnet werden konnten. Die Größenverteilung der Objekte hatte einen D90-Durchmesser von 185 nm. Das größte identifizierte Objekt entsprach einem äquivalenten Kreisdurchmesser von 516 nm.

Auf die gleiche Art und Weise wie in Beispiel 1 bzw. Vergleichsbeispiel 2 wurden die folgenden Beispiele unter Variation der angegebenen Parameter durchgeführt:

**Tabelle 1:**

| | Komponente C) [Gew.-%] | Extruderdrehzahl [1/min] | Durchsatz [kg/h] | Zylindertemperatur [°C] | MVR |
|---|---|---|---|---|---|
| Vergleichsbeispiel 3 | - | 120 | 2,0 | 320 | 6,8 |
| Beispiel 4 | 0,5 | 180 | 2,0 | 310 | 8,5 |
| Vergleichsbeispiel 5 | - | 120 | 2,0 | 325 | 4,4 |
| Beispiel 6 | 0,5 | 120 | 2,0 | 350 | 2,1 |
| Vergleichsbeispiel 7 | - | 120 | 1,42 | 320 | 9,5 |
| Beispiel 8 | 1,0 | 120 | 1,05 | 320 | 5,6 |
| Beispiel 9 | 0,5 | 120 | 1,42 | 320 | 8,1 |

Wie aus dieser Tabelle ersichtlich wird, sind Vergleichsbeispiel 3 und Beispiel 4 im Wesentlichen miteinander vergleichbar. Obwohl eine leicht unterschiedliche Extruderdrehzahl und Zylindertemperatur verwendet wurde, resultieren Polymere mit vergleichbarem MVR. Die Beispiele unterscheiden sich somit durch die Zugabe der Komponente C) in Beispiel 4 bzw. deren Abwesenheit in Vergleichsbeispiel 3.

Ähnliche Schlussfolgerungen können für die Vergleichbarkeit des Vergleichsbeispiels 5 und Beispiels 6, sowie des Vergleichsbeispiels 7 und der Beispiele 8 und 9 gezogen werden. Die Vergleiche sind geeignet, den Effekt der Zugabe der Komponente C) (bzw. auch deren Menge) abzuschätzen.

**Tabelle 2 : Ergebnis Domänenverteilung**

| | Teilchengrößenverteilung; D90 Wert des mittleren Teilchendurchmessers [nm] | Gehalt an Partikeln <100 nm [%] | Volumen-Anteil Teilchen < 200 nm [%] |
|---|---|---|---|
| Vergleichsbeispiel 3 | 124,9 | 75,3 | 84,9 |
| Beispiel 4 | 105,9 | 87,6 | 88,3 |
| Vergleichsbeispiel 5 | 184,7 | 54,2 | 49,9 |
| Beispiel 6 | 115,0 | 80,0 | 100,0 |
| Vergleichsbeispiel 7 | 101,2 | 88,7 | 25,0 |
| Beispiel 8 | 91,0 | 94,5 | 100,0 |
| Beispiel 9 | 98,8 | 90,3 | 61,0 |

Bei Durchsätzen von 2,0 kg/h und Materialien mit einem MVR im Bereich von ca. 7 bis 9 (Vergleichsbeispiel 3 und Beispiel 4) zeigt sich im erfindungsgemäßen Beispiel 4 der positive Einfluss des erfindungsgemäßen niedermolekularen Siloxans. Das erfindungsgemäße Beispiel 4 weist im Vergleich zum Vergleichsbeispiel 3 einen deutlich niedrigeren D90-Wert auf und liefert damit ein Polymermorphologie mit geringerer Siloxandomänengröße.Durch Anheben der Reaktionstemperatur lassen sich niedrigere Viskositäten erreichen (Vergleichsbeispiel 5 und Beispiel 6). Das erfindungsgemäße Beispiel 6, welches den niedermolekularen erfindungsgemäßen Siloxanzusatz der Komponente C) enthält, zeigt einen deutlich geringeren D90-Wert als das Vergleichsbeispiel 5.

Bei niedrigeren Durchsätzen (1,4 kg und geringer im Vergleich zu 2,0 kg/h) zeigt sich ebenfalls der positive Einfluss der Zugabe der speziellen Siloxankomponente. Das erfindungsgemäße Beispiel 9 weist zwar einen ähnlichen D90 Wert wie das Vergleichsbeispiel 7 auf - jedoch ist der Anteil an Teilchen mit einem Volumen < 200 nm deutlich größer als im erfindungsgemäßen Beispiel 9. Teilchen mit großem Volumen sind besonders kritisch in Hinblick auf Störungen bei der Verarbeitung, beispielsweise im Spritzguss. Erhöht man den Anteil an der erfindungsgemäßen Siloxankomponente (Beispiel 8) erreicht man weitere Vorteile, was am niedrigeren D90 Wert und an einer besseren Volumenverteilung (keine Teilchen mehr vorhanden mit einem Volumen >200 nm) der Teilchen zu erkennen ist.

### Einfluss der chemischen Struktur der Komponente C)

### Ausgangsstoffe:

### Komponente A: Polycarbonat

**PC A:** Als Ausgangsstoff für die Reaktivextrusion wird lineares Bisphenol-A-Polycarbonat mit Endgruppen basierend auf Phenol der Firma Covestro Deutschland AG mit einem Schmelzvolumenindex von 59 - 62 cm³/10min gemessen bei 300 °C und 1,2 kg Belastung (gemäß ISO 1033) eingesetzt. Dieses Polycarbonat enthält keine Additive wie UV-Stabilisatoren, Entformungsmittel oder Thermostabilisatoren. Die Herstellung des Polycarbonats erfolgte über einen Schmelzeumesterungsprozess wie in DE 102008019503 beschrieben. Das Polycarbonat weist einen Gehalt an phenolischen Endgruppen von ca. 600 ppm auf.

**PC B:** Als Ausgangsstoff für die Reaktivextrusion wird lineares Bisphenol-A-Polycarbonat mit Endgruppen basierend auf Phenol mit einer Lösungsviskosität von ca. 1,17 eingesetzt. Dieses Polycarbonat enthält keine Additive wie UV-Stabilisatoren, Entformungsmittel oder Thermostabilisatoren. Die Herstellung des Polycarbonats erfolgte über einen Schmelzeumesterungsprozess wie in DE 102008019503 beschrieben. Das Polycarbonat weist einen Gehalt an phenolischen Endgruppen von ca. 1600 ppm auf.

### Komponente B:

**Siloxan-1**
   Bisphenol A-terminertes Polydimethylsiloxan der Formel 3 mit n von ca. 15 und m im Bereich von 3 bis 4 (R¹ = H, R² = Methyl, X = Isopropyliden), mit einem Hydroxy-Gehalt von 27,8 mg KOH/g und einer Viskosität von 165 mPa·s (23°C); der Natrium-Gehalt beträgt ca. 4 ppm.
**Siloxan-2:**

   Hydrochinon-terminertes Polydimethylsiloxan der Formel 2 mit n von ca. 20 und m im Bereich von 3 bis 4 (R¹ = H, R² = Methyl), mit einem Hydroxy-Gehalt von 22,2 mg KOH/g und einer Viskosität von 177 mPa·s (23°C); der Natrium-Gehalt beträgt ca. 3 ppm.
**Siloxan-3:**

   Bisphenol A-terminertes Polydimethylsiloxan der Formel 3 mit n von ca. 30 und m im Bereich von 3 bis 4 (R¹ = H, R² = Methyl, X = Isopropyliden), mit einem Hydroxy-Gehalt von 17,9 mg KOH/g und einer Viskosität von 402 mPa·s (23°C); der Natrium-Gehalt beträgt ca. 3 ppm.

### Komponente C bzw. (ii):

Lineares oligomeres Siloxan der Formel (I) mit Z₁ und Z₂ = OH, R₈ = Methyl und R₉ = Phenyl mit s von im Mittel ca. 4 (oligomeres Gemisch mit Ketten von s = 2 bis ca. 10).

### Vergleichskomponente:

Octaphenylcyclotetrasiloxan (CAS: 546-56-5)., 95%-ig der Firma ABCR GmbH & Co.KG (Karlsruhe Deutschland).

### Katalysator-Masterbatch (ohne Siloxanbasierte Zusatzkomponente):

Als Katalysator wird Tetraphenylphosphoniumphenolat der Firma Rhein Chemie Rheinau GmbH (Mannheim Deutschland) in Form eines Masterbatches eingesetzt. Tetraphenylphosphoniumphenolat wurde als Mischkristall mit Phenol eingesetzt und enthält ca. 70 % Tetraphenylphosphoniumphenolat. Die nachfolgenden Mengen beziehen sich auf die von der Firma Rhein Chemie erhaltene Substanz (als Mischkristall mit Phenol).

Der Masterbatch wurde als 0,25 %ige Mischung hergestellt. Hierzu wurden 4982 g Polycarbonat PC A mit 18 g Tetraphenylphosphoniumphenolat im Rhönradmischer für 30 Minuten aufgetrudelt. Das Masterbatch wurde im Verhältnis 1:10 dosiert, so dass in der Gesamtmenge an Polycarbonat der Katalysator mit einem Anteil von 0,025 Gew.-% vorlag.

### Vergleichsbeispiel 10:

In einem 250 ml Glaskolben mit Rührer und Kurzwegabscheider wurden 42,5 g Polycarbonatgranulat (PC A; 85 Gew.-%), 2,5 g Siloxan-1 (5 Gew.-%) sowie 5 g (10 Gew.-%) Katalysatormasterbatch und 0,1 g (0,2 Gew.-%) Octaphenylcyclotetrasiloxan eingewogen. Die Apparatur wurde evakuiert und mit Stickstoff belüftet (jeweils 3x). Die Mischung wurde durch ein auf 350 °C vorgeheiztes Metallbad innerhalb von 10 Minuten unter Vakuum aufgeschmolzen. Der Druck in der Apparatur betrug ca. 1,5 mbar. Das Reaktionsgemisch wurde für 30 Minuten unter Rühren bei diesem Vakuum gehalten. Danach wurde mit Stickstoff belüftet und die Polymerschmelze entnommen. Man erhielt ein opak-weißes Polymer. Die Lösungsviskosität des Produkts beträgt eta rel = 1,345.

### Vergleichsbeispiel 11:

In einem 250 ml Glaskolben mit Rührer und Kurzwegabscheider wurden 42,5 g Polycarbonatgranulat (PC A; 85 Gew.-%), 2,5 g Siloxan-2 (5 Gew.-%) sowie 5 g (10 Gew.-%) Katalysatormasterbatch (dieser enthielt abweichend zur Angabe oben zusätzlich 1,66 Gew.-% Octaphenylcyclotetrasiloxan) eingewogen. Die Apparatur wurde evakuiert und mit Stickstoff belüftet (jeweils 3x). Die Mischung wurde durch ein auf 350 °C vorgeheiztes Metallbad innerhalb von 10 Minuten unter Vakuum aufgeschmolzen. Der Druck in der Apparatur betrug ca. 1,5 mbar. Das Reaktionsgemisch wurde für 30 Minuten unter Rühren bei diesem Vakuum gehalten. Danach wurde mit Stickstoff belüftet und die Polymerschmelze entnommen. Man erhielt ein opak-weißes Polymer. Die Lösungsviskosität des Produkts beträgt eta rel = 1,46.

### Beispiel 12:

In einem 250 ml Glaskolben mit Rührer und Kurzwegabscheider wurden 47,4 g Polycarbonatgranulat (PC B; 94,8 Gew.-%), eingewogen. Die Apparatur wurdr evakuiert und mit Stickstoff belüftet (jeweils 3x). Die Mischung wurde durch ein auf 350 °C vorgeheiztes Metallbad innerhalb von 10 Minuten unter Normaldruck aufgeschmolzen. Eine Siloxanmischung aus 2,5 g Siloxan-3 (5 Gew.-%) sowie 0,13 g (0,2 Gew.-%) Komponente C (gelöst in Siloxan-3) wurde bei 10 mbar hinzugegeben. Dann wurde der Druck in der Apparatur auf ca. 1,5 mbar reduziert. Das Reaktionsgemisch wurde für ca. 5 Minuten unter Rühren bei diesem Vakuum gehalten. Danach wurde mit Stickstoff belüftet und die Polymerschmelze entnommen. Man erhielt ein opak-weißes Polymer. Die Lösungsviskosität des Produkts beträgt eta rel = 1,38.

**Tabelle 3 : Ergebnis Domänenverteilung**

| | Teilchengrößenverteilung; D90 Wert des mittleren Teilchendurchmessers [nm] | Gehalt an Partikeln <100 nm [%] |
|---|---|---|
| Beispiel 12 | 110,4 | 85,3 |

Die Vergleichsbeispiele 10 und 11 zeigten im AFM eine deutlich grobe Teilchenverteilung; deshalb wurde auf eine genaue Auswertung verzichtetet und nur eine Abschätzung vorgenommen.

**Tabelle 4 : Ergebnis Domänenverteilung**

| | Durchmesser großer Teilchen (40 µm Aufnahme) [nm] | Durchmesser kleiner Teilchen (2,5 µm Aufname) [nm] |
|---|---|---|
| Vergleichsbeispiel 10 | 1700 (länglich) | 20-270 (rund) |
| Vergleichsbeispiel 11 | 1000 (länglich) | 26-240 (rund) |

Der Vergleich des Beispiels 12 mit den Vergleichsbeispielen 10 und 11 zeigt, dass die Zugabe eine Verbindung, welche sowohl aliphatische als auch aromatische Gruppen aufweist, im Vergleich zu einer Verbindung, welche nur aromatische Gruppe aufweist, bei der Herstellung eines Polysiloxan-Polycarbonat-Blockcokondensats zu einer verringerten Siloxandomänenverteilung führt.

## Patentansprüche

1. Polycarbonatzusammensetzung, enthaltend
(i) wenigstens ein Polysiloxan-Polycarbonat-Blockcokondensat,
(ii) wenigstens ein Siloxan der allgemeinen chemischen Formel (I), (Ia) oder beliebige Mischungen davon, 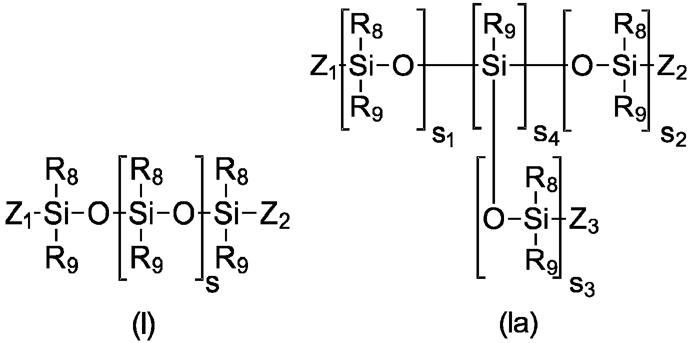
in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
s, s₁, s₂, s₃ und s₄ jeweils unabhängig voneinander für eine natürliche Zahl zwischen 1 und 250 stehen,
(iii) optional mindestens ein weiteres Polymer, welches von Komponente (i) verschieden ist, und
(iv) optional mindestens ein weiteres Additiv.

2. Polycarbonatzusammensetzung nach Anspruch 1, **dadurch gekennzeichnet, dass**
R₈ in der allgemeinen chemischen Formel (I) oder (Ia) jeweils unabhängig voneinander für Methyl, Ethyl, Propyl, Butyl, Isopropyl, Isobutyl, Vinyl, ein C5 bis C18-Alkyl oder ein gegebenenfalls mit Alkyl oder Alkoxy substituiertes Phenylethyl, Phenylisopropyl, 3-Phenylpropyl oder Phenyl steht,
R₉ in der allgemeinen chemischen Formel (I) oder (Ia) jeweils unabhängig voneinander für Methyl, Ethyl, Propyl, Butyl, Isopropyl, Isobutyl, Vinyl, ein C5 bis C18-Alkyl oder ein gegebenenfalls mit Alkyl oder Alkoxy substituiertes Phenylethyl, Phenylisopropyl, 3-Phenylpropyl oder Phenyl steht,
mit der Maßgabe, dass zumindest ein R₈ für Methyl, Ethyl, Propyl, Butyl, Isopropyl, Vinyl, Isobutyl oder ein C5 bis C18-Alkyl steht und zumindest ein R₉ für ein ein gegebenenfalls mit Alkyl oder Alkoxy substituiertes Phenylethyl, Phenylisopropyl, 3-Phenylpropyl oder Phenyl steht und
Z₁, Z₂ und Z₃ in der allgemeinen chemischen Formel (I) oder (Ia) jeweils unabhängig voneinander die in Anspruch 1 genannten Bedeutungen haben.

3. Polycarbonatzusammensetzung nach Anspruch 2, **dadurch gekennzeichnet, dass**
R₈ in der allgemeinen chemischen Formel (I) oder (Ia) jeweils unabhängig voneinander für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht und
R₉ in der allgemeinen chemischen Formel (I) oder (Ia) jeweils unabhängig für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
mit der Maßgabe, dass zumindest ein R₈ für Methyl oder Ethyl steht und zumindest ein R₉ für ein Trimethylphenyl oder Phenyl steht und
Z₁, Z₂ und Z₃ in der allgemeinen chemischen Formel (I) oder (Ia) jeweils unabhängig voneinander die in Anspruch 1 genannten Bedeutungen haben.

4. Polycarbonatzusammensetzung nach einem der Ansprüche 1 bis 3, **dadurch gekennzeichnet, dass** das wenigstens eine Siloxan der Komponente (ii) dargestellt wird durch die allgemeine chemische Formel (II), die allgemeine chemische Formel (IIa), die allgemeine chemische Formel (III) und/oder die allgemeine chemische Formel (IV), 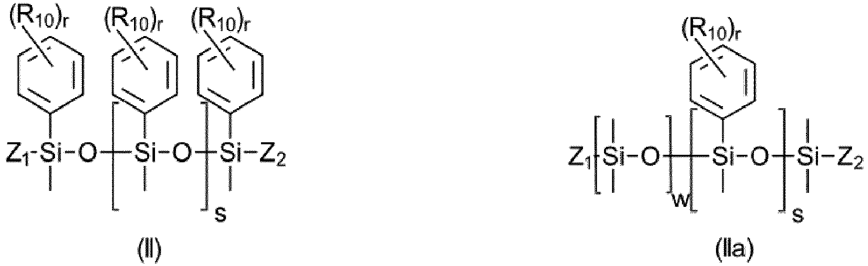 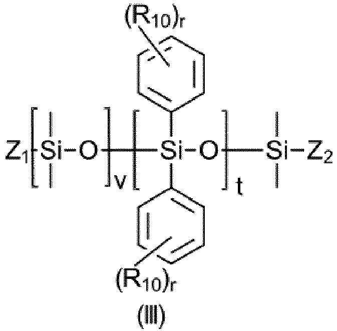 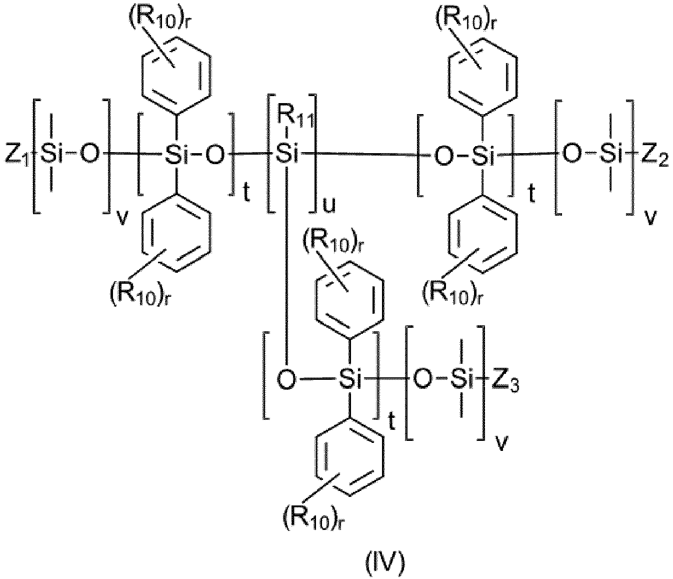
in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN, bevorzugt Methyl, Methoxy, Ethoxy, Wasserstoff oder Hydroxy stehen,
R₁₀ jeweils unabhängig voneinander für Wasserstoff, Methyl, Ethyl, Propyl, Butyl, Isopropyl, Isobutyl, Isooctyl, Isononyl oder Isodecyl steht,
R₁₁ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
r eine natürliche Zahl zwischen 0 und 3 ist,
s und t jeweils unabhängig voneinander eine natürliche Zahl zwischen 1 und 250, bevorzugt zwischen 1 und 100, insbesondere bevorzugt zwischen 5 und 75 ist,
w und v jeweils unabhängig voneinander eine natürliche Zahl zwischen 1 und 250, bevorzugt zwischen 1 und 100, insbesondere bevorzugt zwischen 5 und 75 ist und
Gruppen mit den Indizes s, w, v, t und u statistisch verteilt im Siloxan der Komponente (ii) verteilt vorliegen können

5. Polycarbonatzusammensetzung nach Anspruch 4, **dadurch gekennzeichnet, dass** in den allgemeinen chemischen Formeln (II), (IIa), (III) und (IV)
Z₁, Z₂ und Z₃ jeweils unabhängig voneinander für Methyl, Vinyl, Methoxy, Ethoxy, Wasserstoff oder Hydroxy, bevorzugt Methyl, Hydroxy oder eine Mischung von Methoxy und Ethoxy stehen,
R₁₀ für Wasserstoff oder Methyl steht,
R₁₁ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen, bevorzugt Methyl oder Phenyl,
r eine natürliche Zahl zwischen 0 und 3 ist,
s eine natürliche Zahl zwischen 5 und 75 ist,
t eine natürliche Zahl zwischen 1 und 75 ist,
w eine natürliche Zahl zwischen 5 und 75 ist
v eine natürliche Zahl zwischen 1 und 75 ist und
u eine natürliche Zahl zwischen 1 und 10 ist..

6. Verfahren zur Herstellung von Polysiloxan-Polycarbonat-Blockcokondensaten, wobei
A) wenigstens ein Polycarbonat mit
B) wenigstens einem hydroxyarylterminierten (Poly)Siloxan unter Verwendung
C) wenigstens eines Siloxans der allgemeinen chemischen Formel (I), (Ia) oder beliebige Mischungen davon, 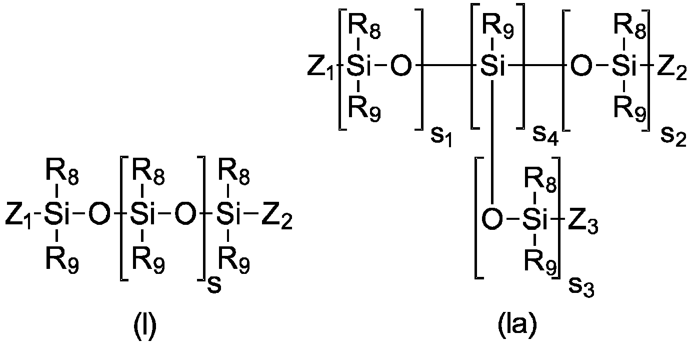
in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
s, s₁, s₂, s₃ und s₄ jeweils unabhängig voneinander eine natürliche Zahl zwischen 1 und 250 stehen,
in der Schmelze umgesetzt wird, **dadurch gekennzeichnet, dass** das Verfahren einen Schritt der Zugabe der Komponente C) zur Komponente A), zur Komponente B) und/oder zu einer Mischung aus Komponente A) und B) umfasst.

7. Verfahren zur Herstellung von Polysiloxan-Polycarbonat-Blockcokondensaten nach Anspruch 6, **dadurch gekennzeichnet, dass**
wobei Komponente B) ein hydroxyarylterminiertes (Poly)Siloxan der Formel (1) ist, 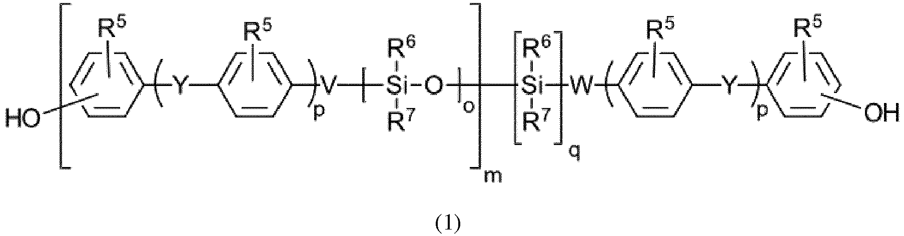 wobei
R⁵ für Wasserstoff oder C1 bis C4 Alkyl, vorzugsweise für Wasserstoff oder Methyl, steht,
R⁶ und R⁷ unabhängig voneinander für C1 bis C4 Alkyl, vorzugsweise für Methyl stehen,
Y für eine Einfachbindung, -CO-, -O-, C₁- bis C₅-Alkylen, C₂ bis Cs-Alkyliden oder für einen C₅ bis C₆-Cycloalkylidenrest, der ein- oder mehrfach mit C₁ bis C₄-Alkyl substituiert sein kann, bevorzugt für eine Einfachbindung, -O-, Isopropyliden oder für einen C₅ bis C₆-Cycloalkylidenrest, der ein- oder mehrfach mit C₁ bis C₄-Alkyl substituiert sein kann, steht,
V für Sauerstoff, C2-C6 Alkylen oder C3- bis C6-Alkyliden, bevorzugt für Sauerstoff oder C3-Alkylen,
wenn q = 0 ist, W für eine Einfachbindung steht,
wenn q = 1 ist, W für Sauerstoff, C2 bis C6-Alkylen oder C3- bis C6-Alkyliden, bevorzugt für Sauerstoff oder C3-Alkylen steht,
p und q jeweils unabhängig für 0 oder 1 stehen,
o für eine durchschnittliche Anzahl von Wiederholungseinheiten von 10 bis 400, bevorzugt 10 bis 100 steht, und
m für eine durchschnittliche Anzahl von Wiederholungseinheiten von 1 bis 10, bevorzugt 1,5 bis 5steht.

8. Verfahren zur Herstellung von Polysiloxan-Polycarbonat-Blockcokondensaten nach einem der Ansprüche 6 oder 7, **dadurch gekennzeichnet, dass**
Komponente B) ein hydroxyarylterminiertes (Poly)Siloxan der Formeln (2), (3), (VII), (VIII) oder (IX) ist: 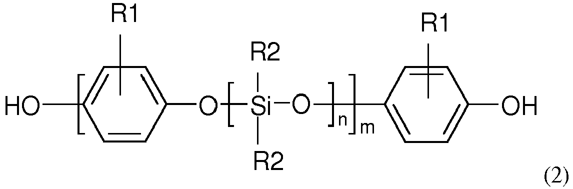 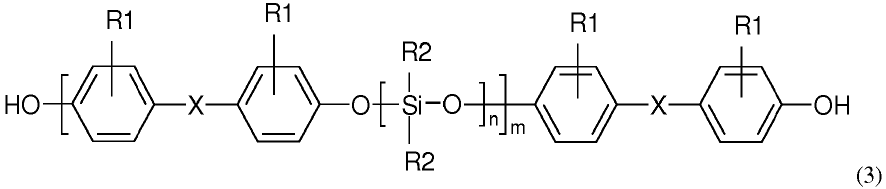 wobei R1 für Wasserstoff, C₁-C₄-Alkyl, vorzugsweise für Wasserstoff oder Methyl steht,
R2 unabhängig für Aryl oder Alkyl, bevorzugt für Methyl steht,
X für eine Einfachbindung, C1 bis C5-Alkylen, C2 bis C5-Alkyliden, C5 bis C12-Cycloalkyliden, -O-,-SO- -CO-, -S-, -SO2-, bevorzugt für eine Einfachbindung, Isopropyliden, C5 bis C12 Cycloalkyliden oder Sauerstoff, und ganz besonders bevorzugt für Isopropyliden steht,
n eine Zahl zwischen 10 und 150 ist,
m eine Zahl von 1 bis 10 ist, 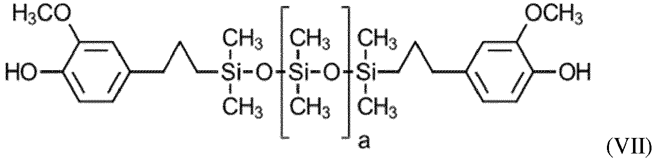 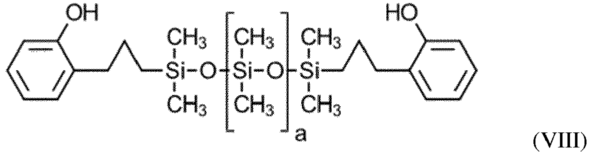 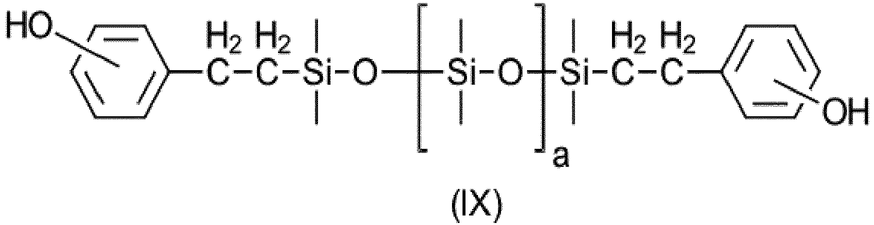 wobei a in Formel (VII), (VIII) und (IX) für eine durchschnitttliche Zahl von 10 bis 400, bevorzugt 10 bis 100 und besonders bevorzugt für 15 bis 50 steht.

9. Verfahren zur Herstellung von Polysiloxan-Polycarbonat-Blockcokondensaten nach einem der Ansprüche 6 bis 8, **dadurch gekennzeichnet, dass**
R₈ in der allgemeinen chemischen Formel (I) oder (Ia) jeweils unabhängig voneinander für Methyl, Ethyl, Propyl, Butyl, Isopropyl, Isobutyl, Vinyl, ein C5 bis C18-Alkyl ein gegebenenfalls mit Alkyl oder Alkoxy substituiertes Phenylethyl, Phenylisopropyl, 3-Phenylpropyl oder Phenyl steht und
R₉ in der allgemeinen chemischen Formel (I) oder (Ia) jeweils unabhängig voneinander für Methyl, Ethyl, Propyl, Butyl, Isopropyl, Isobutyl, Vinyl, ein C5 bis C18-Alkyl ein gegebenenfalls mit Alkyl oder Alkoxy substituiertes Phenylethyl, Phenylisopropyl, 3-Phenylpropyl oder Phenyl steht,
mit der Maßgabe, dass zumindest ein R₈ für Methyl, Ethyl, Propyl, Butyl, Isopropyl, Vinyl, Isobutyl oder ein C5 bis C18-Alkyl steht und zumindest ein R₉ für ein gegebenenfalls mit Alkyl oder Alkoxy substituiertes Phenylethyl, Phenylisopropyl, 3-Phenylpropyl oder Phenylsteht.

10. Verfahren zur Herstellung von Polysiloxan-Polycarbonat-Blockcokondensaten nach einem der Ansprüche 6 bis 9, **dadurch gekennzeichnet, dass**
R₈ in der allgemeinen chemischen Formel (I) oder (Ia) jeweils unabhängig voneinander für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht und
R₉ in der allgemeinen chemischen Formel (I) oder (Ia) jeweils unabhängig für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
mit der Maßgabe, dass zumindest ein R₈ für Methyl oder Ethyl steht und zumindest ein R₉ für ein Trimethylphenyl oder Phenyl steht.

11. Verfahren zur Herstellung von Polysiloxan-Polycarbonat-Blockcokondensaten nach einem der Ansprüche 6 bis 10, **dadurch gekennzeichnet, dass** das wenigstens eine Siloxan der Komponente C) dargestellt wird durch die allgemeine chemische Formel (II), die allgemeine chemische Formel (IIa), die allgemeine chemische Formel (III) und/oder die allgemeine chemische Formel (IV) 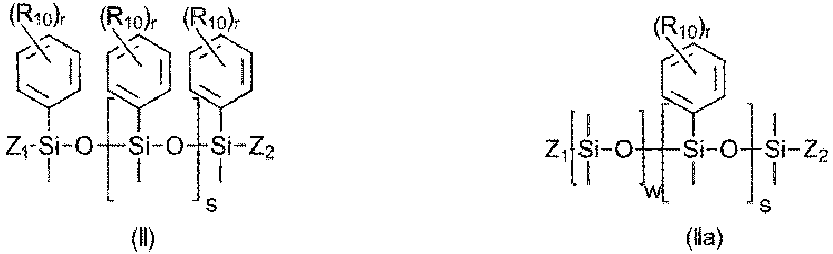 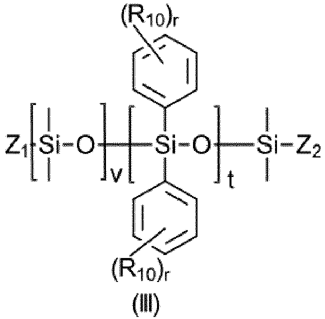 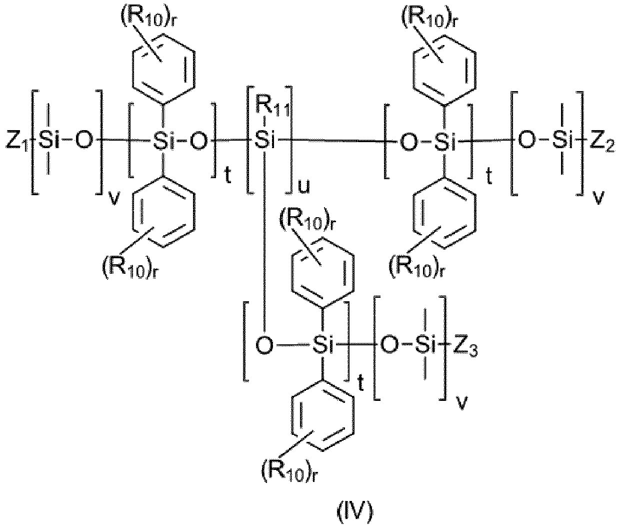 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN, bevorzugt Methyl, Methyloxy, Wasserstoff oder Hydroxy stehen,
R₁₀ jeweils unabhängig voneinander für Wasserstoff, Methyl, Ethyl, Propyl, Butyl, Isopropyl, Isobutyl, Isooctyl, Isononyl oder Isodecyl steht,
R₁₁ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
r eine natürliche Zahl zwischen 0 und 3 ist,
s und t jeweils unabhängig eine natürliche Zahl zwischen 1 und 250, bevorzugt zwischen 1 und 100, insbesondere bevorzugt zwischen 5 und 75 ist,
w und v jeweils unabhängig eine natürliche Zahl zwischen 1 und 250, bevorzugt zwischen 1 und 100, insbesondere bevorzugt zwischen 5 und 75 ist und
Gruppen mit den Indizes s, w, v, t und u statistisch verteilt im Siloxan der Komponente C) verteilt vorliegen können, .

12. Verfahren zur Herstellung von Polysiloxan-Polycarbonat-Blockcokondensaten nach Anspruch 11, **dadurch gekennzeichnet, dass** in den allgemeinen chemischen Formeln (II), (IIa), (III) und (IV)
Z₁, Z₂ und Z₃ jeweils unabhängig voneinander für Methyl, Vinyl, Methoxy, Ethoxy Wasserstoff oder Hydroxy, bevorzugt Methyl, Hydroxy oder eine Mischung aus Methoxy und Ethoxy stehen,
R₁₀ für Wasserstoff oder Methyl steht,
R₁₁ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
r eine natürliche Zahl zwischen 0 und 3 ist,
s eine natürliche Zahl zwischen 5 und 75 ist,
t eine natürliche Zahl zwischen 1 und 75 ist,
w eine natürliche Zahl zwischen 5 und 75 ist und
v eine natürliche Zahl zwischen 1 und 75 ist.

13. Verfahren zur Herstellung von Polysiloxan-Polycarbonat-Blockcokondensaten nach einem der Ansprüche 6 bis 12, **dadurch gekennzeichnet, dass** 0,01 bis 20 Gew.-% der Komponente C) zur Komponente A), zur Komponente B) und/oder zu einer Mischung aus Komponente A) und B) hinzugegeben werden, wobei die Gew.-% sich auf die Summe der Komponenten A), B) und C) bezieht.

14. Verwendung eines Siloxans der allgemeinen chemischen Formel (I), (Ia) oder beliebigen Mischungen davon 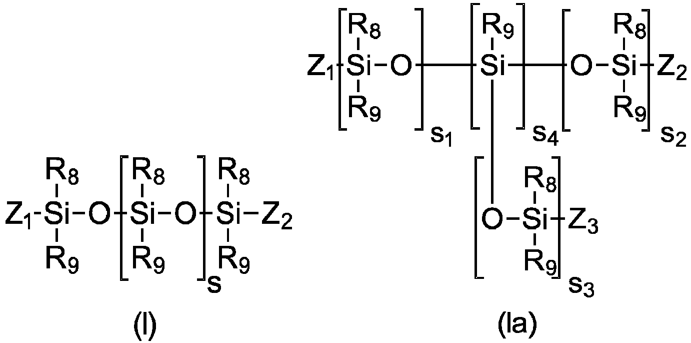 in denen Z₁, Z₂ und Z₃ jeweils unabhängig voneinander für Methyl, Ethyl, Propyl, Butyl, Isopropyl, Isobutyl, Vinyl, Propenyl, Butenyl, C5 bis C18 Alkyl, Methacryloxypropyl; Monodicarbinol, Methoxy, Ethoxy, Propoxy, Butoxy, Epoxypropoxypropyl, ein gegebenenfalls mit Alkyl oder Alkoxy substituiertes Phenylethyl, Phenylisopropyl, 3-Phenylpropyl oder Phenyl, Hydroxy, Wasserstoff, Chlor, Fluor oder CN stehen,
R₈ und R₉ jeweils unabhängig voneinander für eine aliphatische oder eine aromatische Gruppe stehen, mit der Maßgabe, dass in der Formel (I) oder (Ia) zumindest ein R₈ für eine aliphatische und zumindest ein R₉ für eine aromatische Gruppe steht und
s, s₁, s₂, s₃ und s₄ jeweils unabhängig voneinander für eine natürliche Zahl zwischen 1 und 250 stehen,
zur Reduzierung der Teilchengrößenverteilung der Siloxandomänen in einem Polysiloxan-Polycarbonat-Blockcokondensat bei einem Verfahren zur Herstellung dieses Polysiloxan-Polycarbonat-Blockcokondensats.

15. Verwendung nach Anspruch 14, **dadurch gekennzeichnet, dass** das Verfahren zur Herstellung des Polysiloxan-Polycarbonat-Blockcokondensats mindestens eine Reaktivextrusion oder mindestens eine Schmelzeumesterung umfasst.

## Claims

1. Polycarbonate composition containing
(i) at least one polysiloxane-polycarbonate block co-condensate,
(ii) at least one siloxane of general chemical formula (I), (Ia) or any desired mixtures thereof, 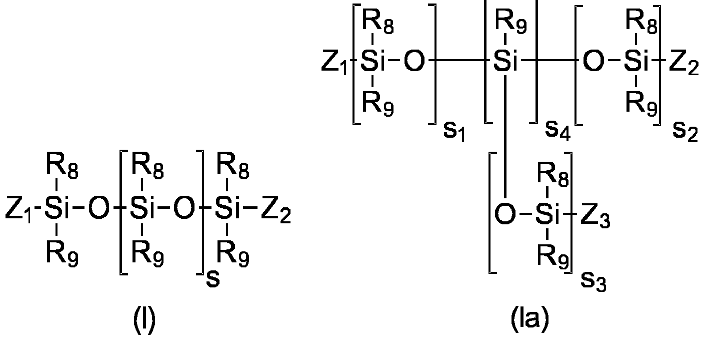
in which Z₁, Z₂ and Z₃ each independently of one another represent methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN,
R₈ and R₉ each independently of one another represent an aliphatic or an aromatic group with the proviso that in the formula (I) or (Ia) at least one R₈ represents an aliphatic group and at least one R₉ represents an aromatic group and
s, s₁, s₂, s₃ and s₄ each independently of one another represent a natural number between 1 and 250,
(iii) optionally at least one further polymer distinct from component (i) and
(iv) optionally at least one further additive.

2. Polycarbonate composition according to Claim 1, **characterized in that**
R₈ in general chemical formula (I) or (Ia) independently at each occurrence represents methyl, ethyl, propyl, butyl, isopropyl, isobutyl, vinyl, C5 to C18-alkyl or optionally alkyl- or alkoxy-substituted phenylethyl, phenylisopropyl, 3-phenylpropyl or phenyl,
R₉ in general chemical formula (I) or (Ia) independently at each occurrence represents methyl, ethyl, propyl, butyl, isopropyl, isobutyl, vinyl, C5 to C18-alkyl or optionally alkyl- or alkoxy-substituted phenylethyl, phenylisopropyl, 3-phenylpropyl or phenyl,
with the proviso that at least one R₈ represents methyl, ethyl, propyl, butyl, isopropyl, vinyl, isobutyl or C5 to C18-alkyl and at least one R₉ represents optionally alkyl- or alkoxy-substituted phenylethyl, phenylisopropyl, 3-phenylpropyl or phenyl and
Z₁, Z₂ and Z₃ in general chemical formula (I) or (Ia) each independently of one another have the definitions recited in Claim 1.

3. Polycarbonate composition according to Claim 2, **characterized in that**
R₈ in general chemical formula (I) or (Ia) independently at each occurrence represents methyl, ethyl, trimethylphenyl, -CH₂-CH₂-phenyl, -CH₂-CH₂-CH₂-phenyl, -CH₂-CH(CH₃)-phenyl, -CH₂-CH₂-CH₂- (2-methoxy)phenyl or phenyl and
R₉ in general chemical formula (I) or (Ia) independently at each occurrence represents methyl, ethyl, trimethylphenyl, -CH₂-CH₂-phenyl, -CH₂-CH₂-CH₂-phenyl, -CH₂-CH(CH₃)-phenyl, -CH₂-CH₂-CH₂-(2-methoxy)phenyl or phenyl,
with the proviso that at least one R₈ represents methyl or ethyl and at least one R₉ represents trimethylphenyl or phenyl and
Z₁, Z₂ and Z₃ in general chemical formula (I) or (Ia) each independently of one another have the definitions recited in Claim 1.

4. Polycarbonate composition according to any of Claims 1 to 3, **characterized in that** the at least one siloxane of component (ii) is represented by general chemical formula (II), general chemical formula (IIa), general chemical formula (III) and/ or general chemical formula (IV) 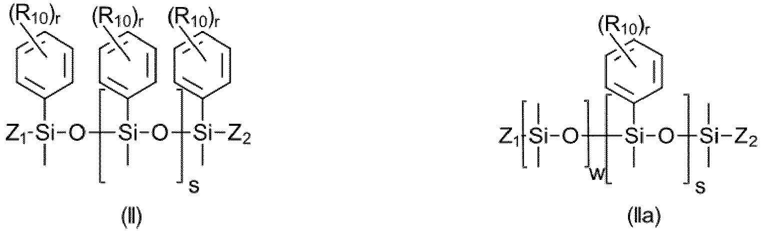 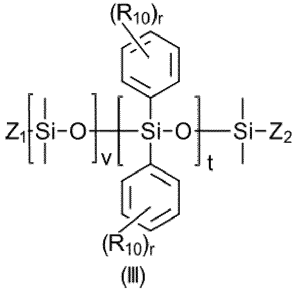 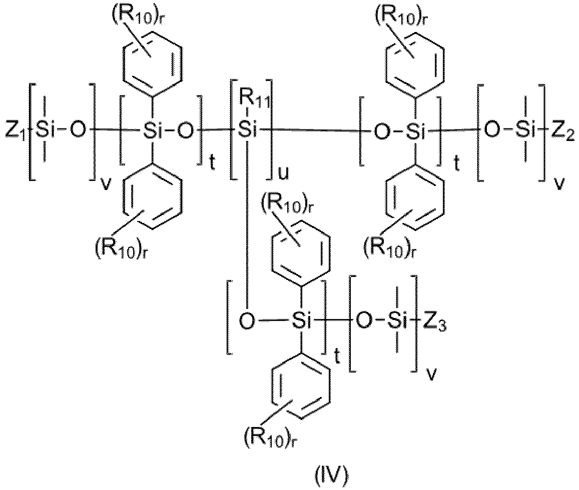
in which Z₁, Z₂ and Z₃ each independently of one another represent methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN, preferably methyl, methoxy, ethoxy, hydrogen or hydroxy,
R₁₀ independently at each occurrence represents hydrogen, methyl, ethyl, propyl, butyl, isopropyl, isobutyl, isooctyl, isononyl or isodecyl,
R₁₁ independently at each occurrence represents methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN, r is a natural number between 0 and 3,
s and t are each independently of one another a natural number between 1 and 250, preferably between 1 and 100, especially preferably between 5 and 75, and
w and v are each independently of one another a natural number between 1 and 250, preferably between 1 and 100, especially preferably between 5 and 75, and
groups having the indices s, w, v, t and u can have a random distribution in the siloxane of component (ii).

5. Polycarbonate composition according to Claim 4, **characterized in that** in general chemical formulae (II), (IIa), (III) and (IV)
Z₁, Z₂ and Z₃ each independently of one another represent methyl, vinyl, methoxy, ethoxy, hydrogen or hydroxy, preferably methyl, hydroxy or a mixture of methoxy and ethoxy,
R₁₀ represents hydrogen or methyl,
R₁₁ independently at each occurrence represents methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN, preferably methyl or phenyl,
r is a natural number between 0 and 3,
s is a natural number between 5 and 75,
t is a natural number between 1 and 75,
w is a natural number between 5 and 75,
v is a natural number between 1 and 75 and
u is a natural number between 1 and 10.

6. Process for producing polysiloxane-polycarbonate block co-condensates, wherein
A) at least one polycarbonate is reacted in the melt with
B) at least one hydroxyaryl-terminated (poly)siloxane using
C) at least one siloxane of general chemical formula (I), (Ia) or any desired mixtures thereof, 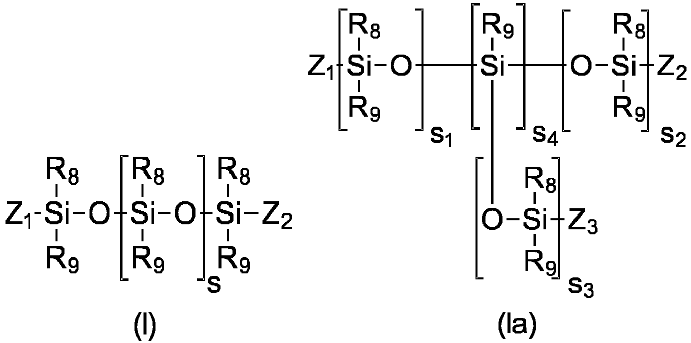
in which Z₁, Z₂ and Z₃ each independently of one another represent methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN,
R₈ and R₉ each independently of one another represent an aliphatic or an aromatic group with the proviso that in the formula (I) or (Ia) at least one R₈ represents an aliphatic group and at least one R₉ represents an aromatic group and
s, s₁, s₂, s₃ and s₄ each independently of one another represent a natural number between 1 and 250, **characterized in that** the process comprises a step of adding the component C) to the component A), to the component B) and/or to a mixture of component A) and B).

7. Process for producing polysiloxane-polycarbonate block co-condensates according to Claim 6, **characterized in that**
wherein component B) is a hydroxyaryl-terminated (poly)siloxane of formula (1), 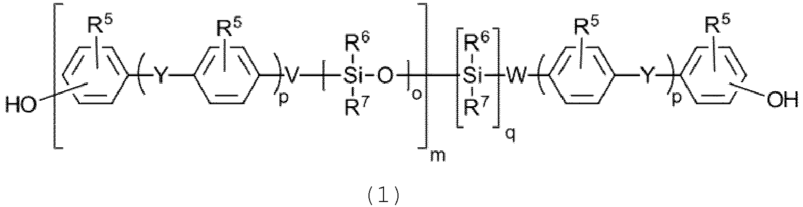 wherein
R⁵ represents hydrogen or C1 to C4 alkyl, preferably hydrogen or methyl,
R⁶ and R⁷ independently of one another represent C1 to C4 alkyl, preferably methyl,
Y represents a single bond, -CO-, -O-, C₁- to C₅-alkylene, C₂- to C₅-alkylidene or a C₅- to C₆-cycloalkylidene radical which may be mono- or polysubstituted by C₁- to C₄-alkyl, preferably a single bond, -O-, isopropylidene or a C₅- to C₆-cycloalkylidene radical which may be mono- or polysubstituted by C₁- to C₄-alkyl,
V represents oxygen, C2-C6 alkylene or C3- to C6-alkylidene, preferably oxygen or C3-alkylene,
when q = 0, W represents a single bond,
when q = 1, W represents oxygen, C2 to C6-alkylene or C3-to C6-alkylidene, preferably oxygen or C3-alkylene,
p and q are each independently 0 or 1,
o represents an average number of repeating units from 10 to 400, preferably 10 to 100, and
m represents an average number of repeating units from 1 to 10, preferably 1.5 to 5.

8. Process for producing polysiloxane-polycarbonate block co-condensates according to either of Claims 6 or 7, **characterized in that**
component B) is a hydroxyaryl-terminated (poly)siloxane of formulae (2), (3), (VII), (VIII) or (IX): 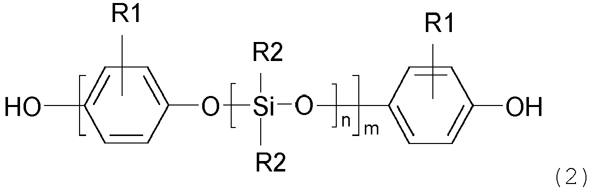 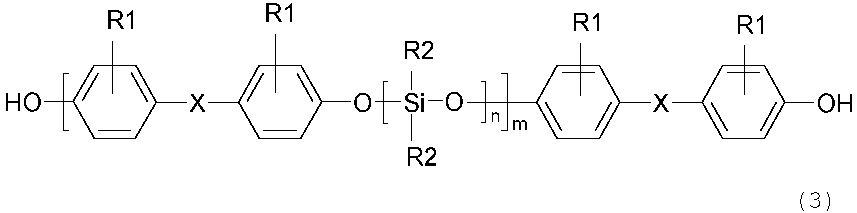 wherein R1 represents hydrogen, C1-C4-alkyl, preferably hydrogen or methyl,
R2 independently represents aryl or alkyl, preferably methyl,
X represents a single bond, C1 to C5-alkylene, C2 to C5-alkylidene, C5 to C12-cycloalkylidene, -O-, -SO- -CO-, - S-, -SO2-, preferably a single bond, isopropylidene, C5 to C12 cycloalkylidene or oxygen and very particularly preferably isopropylidene,
n is a number between 10 and 150,
m is a number from 1 to 10, 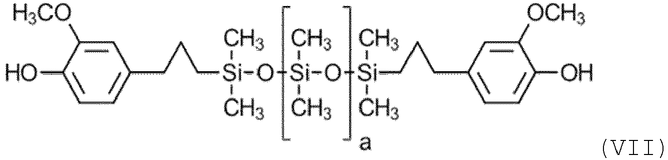 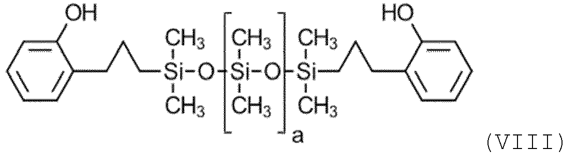 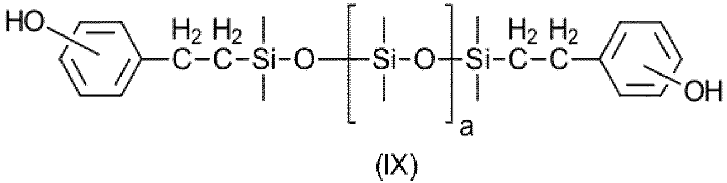 wherein a in formulae (VII), (VIII) and (IX) represents an average number from 10 to 400, preferably 10 to 100 and particularly preferably 15 to 50.

9. Process for producing polysiloxane-polycarbonate block co-condensates according to any of Claims 6 to 8, **characterized in that**
R₈ in general chemical formula (I) or (Ia) independently at each occurrence represents methyl, ethyl, propyl, butyl, isopropyl, isobutyl, vinyl, C5 to C18-alkyl or optionally alkyl- or alkoxy-substituted phenylethyl, phenylisopropyl, 3-phenylpropyl or phenyl and
R₉ in general chemical formula (I) or (Ia) independently at each occurrence represents methyl, ethyl, propyl, butyl, isopropyl, isobutyl, vinyl, C5 to C18-alkyl or optionally alkyl- or alkoxy-substituted phenylethyl, phenylisopropyl, 3-phenylpropyl or phenyl,
with the proviso that at least one R₈ represents methyl, ethyl, propyl, butyl, isopropyl, vinyl, isobutyl or C5 to C18-alkyl and at least one R₉ represents optionally alkyl- or alkoxy-substituted phenylethyl, phenylisopropyl, 3-phenylpropyl or phenyl.

10. Process for producing polysiloxane-polycarbonate block co-condensates according to any of Claims 6 to 9, **characterized in that**
R₈ in general chemical formula (I) or (Ia) independently at each occurrence represents methyl, ethyl, trimethylphenyl, -CH₂-CH₂-phenyl, -CH₂-CH₂-CH₂-phenyl,-CH₂-CH(CH₃)-phenyl, -CH₂-CH₂-CH₂-(2-methoxy)phenyl or phenyl and
R₉ in general chemical formula (I) or (Ia) independently at each occurrence represents methyl, ethyl, trimethylphenyl, -CH₂-CH₂-phenyl, -CH₂-CH₂-CH₂-phenyl,-CH₂-CH(CH₃)-phenyl, -CH₂-CH₂-CH₂-(2-methoxy)phenyl or phenyl,
with the proviso that at least one R₈ represents methyl or ethyl and at least one R₉ represents trimethylphenyl or phenyl.

11. Process for producing polysiloxane-polycarbonate block co-condensates according to any of Claims 6 to 10, **characterized in that** the at least one siloxane of component C) is represented by general chemical formula (II), general chemical formula (IIa), general chemical formula (III) and/or general chemical formula (IV) 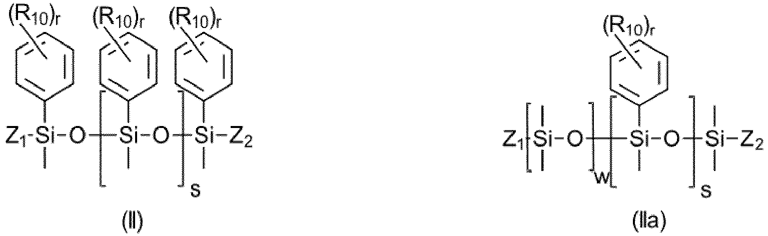 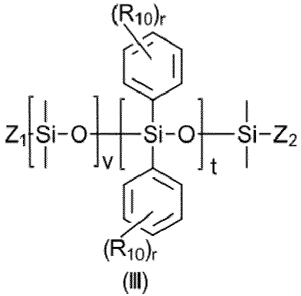 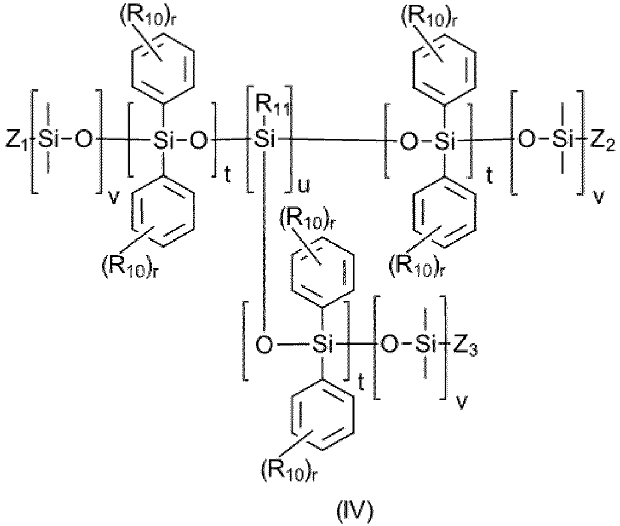 in which Z₁, Z₂ and Z₃ each independently of one another represent methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN, preferably methyl, methyloxy, hydrogen or hydroxy,
R₁₀ independently at each occurrence represents hydrogen, methyl, ethyl, propyl, butyl, isopropyl, isobutyl, isooctyl, isononyl or isodecyl,
R₁₁ independently at each occurrence represents methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN, r is a natural number between 0 and 3,
s and t are each independently a natural number between 1 and 250, preferably between 1 and 100, especially preferably between 5 and 75,
w and v are each independently a natural number between 1 and 250, preferably between 1 and 100, especially preferably between 5 and 75, and
groups having the indices s, w, v, t and u can have a random distribution in the siloxane of component C).

12. Process for producing polysiloxane-polycarbonate block co-condensates according to Claim 11, **characterized in that** in general chemical formulae (II), (IIa), (III) and (IV)
Z₁, Z₂ and Z₃ each independently of one another represent methyl, vinyl, methoxy, ethoxy, hydrogen or hydroxy, preferably methyl, hydroxy or a mixture of methoxy and ethoxy,
R₁₀ represents hydrogen or methyl,
R₁₁ independently at each occurrence represents methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN,
r is a natural number between 0 and 3,
s is a natural number between 5 and 75,
t is a natural number between 1 and 75,
w is a natural number between 5 and 75 and
v is a natural number between 1 and 75.

13. Process for producing polysiloxane-polycarbonate block co-condensates according to any of Claims 6 to 12, **characterized in that** 0.01% to 20% by weight of the component C) are added to the component A), to the component B) and/or to a mixture of component A) and B), wherein the % by weight values are based on the sum of the components A), B) and C).

14. Use of a siloxane of general chemical formula (I), (Ia) or any desired mixtures thereof, 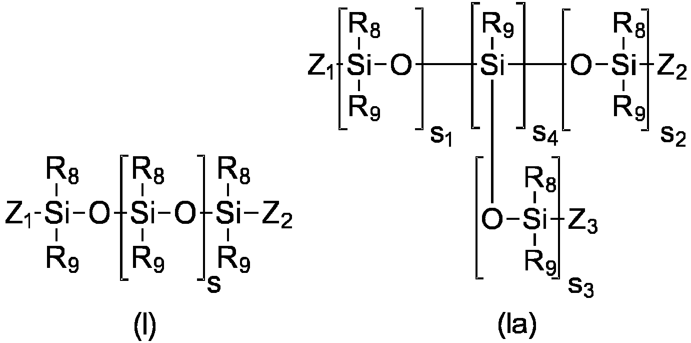 in which Z₁, Z₂ and Z₃ each independently of one another represent methyl, ethyl, propyl, butyl, isopropyl, isobutyl, vinyl, propenyl, butenyl, C5 to C18 alkyl, methacryloxypropyl; monodicarbinol, methoxy, ethoxy, propoxy, butoxy, epoxypropoxypropyl, optionally alkyl- or alkoxy-substituted phenylethyl, phenylisopropyl, 3-phenylpropyl or phenyl, hydroxy, hydrogen, chlorine, fluorine or CN,
R₈ and R₉ each independently of one another represent an aliphatic or an aromatic group with the proviso that in the formula (I) or (Ia) at least one R₈ represents an aliphatic group and at least one R₉ represents an aromatic group and
s, s₁, s₂, s₃ and s₄ each independently of one another represent a natural number between 1 and 250,
for reducing the particle size distribution of the siloxane domains in a polysiloxane-polycarbonate block co-condensate in a process for producing this polysiloxane-polycarbonate block co-condensate.

15. Use according to Claim 14, **characterized in that** the process for producing the polysiloxane-polycarbonate block co-condensate comprises at least one reactive extrusion or at least one melt transesterification.

## Revendications

1. Composition de polycarbonate, contenant
(i) au moins un cocondensat séquencé de polysiloxane-polycarbonate,
(ii) au moins un siloxane de la formule chimique générale (I), (Ia) ou des mélanges quelconques de ceux-ci, 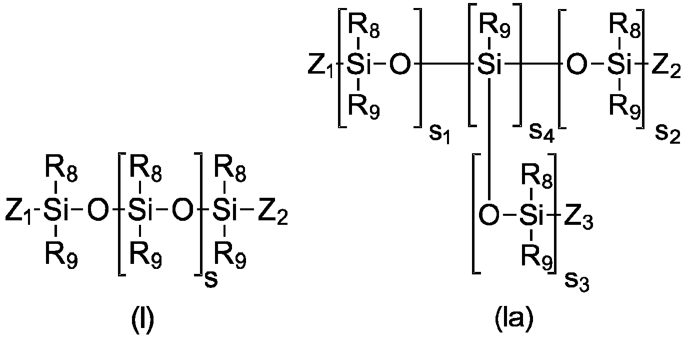 dans lesquelles
Z₁, Z₂ et Z₃ représentent, à chaque fois indépendamment les uns des autres, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN,
R₈ et R₉ représentent, à chaque fois indépendamment l'un de l'autre, un groupe aliphatique ou aromatique, sous réserve que, dans la formule (I) ou (la), au moins un R₈ représente un groupe aliphatique et au moins un R₉ représente un groupe aromatique et
s, s₁ s₂, s₃ et s₄ représentent, à chaque fois indépendamment les uns des autres, un nombre naturel entre 1 et 250,
(iii) éventuellement au moins un autre polymère, qui est différent du composant (i) et
(iv) éventuellement au moins un autre additif.

2. Composition de polycarbonate selon la revendication 1, **caractérisée en ce que**
R₈ dans la formule chimique générale (I) ou (Ia) représente, à chaque fois indépendamment, méthyle, éthyle, propyle, butyle, isopropyle, isobutyle, vinyle, C₅-C₁₈-alkyle ; ou phényléthyle, phénylisopropyle, 3-phénylpropyle ou phényle, le cas échéant substitués par alkyle ou alcoxy,
R₉ dans la formule chimique générale (I) ou (Ia) représente, à chaque fois indépendamment, méthyle, éthyle, propyle, butyle, isopropyle, isobutyle, vinyle, C₅-C₁₈-alkyle ; ou phényléthyle, phénylisopropyle, 3-phénylpropyle ou phényle, le cas échéant substitués par alkyle ou alcoxy,
sous réserve qu'au moins un R₈ représente méthyle, éthyle, propyle, butyle, isopropyle, vinyle, isobutyle ou C₅-C₁₈-alkyle et qu'au moins un R₉ représente phényléthyle, phénylisopropyle, 3-phénylpropyle ou phényle, le cas échéant substitués par alkyle ou alcoxy et
Z₁, Z₂ et Z₃ dans la formule chimique générale (I) ou (Ia) présentent, à chaque fois indépendamment les uns des autres, les significations mentionnées dans la revendication 1.

3. Composition de polycarbonate selon la revendication 2, **caractérisée en ce que**
R₈ dans la formule chimique générale (I) ou (Ia) représente, à chaque fois indépendamment, méthyle, éthyle, triméthylphényle, -CH₂-CH₂-phényle, -CH₂-CH₂-CH₂-phényle, -CH₂-CH(CH₃)-phényle, -CH₂-CH₂-CH₂-(2-méthoxy)phényle ou phényle et
R₉ dans la formule chimique générale (I) ou (Ia) représente, à chaque fois indépendamment, méthyle, éthyle, triméthylphényle, -CH₂-CH₂-phényle, -CH₂-CH₂-CH₂-phényle, -CH₂-CH(CH₃)-phényle, -CH₂-CH₂-CH₂-(2-méthoxy)phényle ou phényle,
sous réserve qu'au moins un R₈ représente méthyle ou éthyle et qu'au moins un R₉ représente triméthylphényle ou phényle et
Z₁, Z₂ et Z₃ dans la formule chimique générale (I) ou (Ia) présentent, à chaque fois indépendamment les uns des autres, les significations mentionnées dans la revendication 1.

4. Composition de polycarbonate selon l'une quelconque des revendications 1 à 3, **caractérisée en ce que** ledit au moins un siloxane du composant (ii) est représenté par la formule chimique générale (II), la formule chimique générale (IIa), la formule chimique générale (III) et/ou la formule chimique générale (IV), 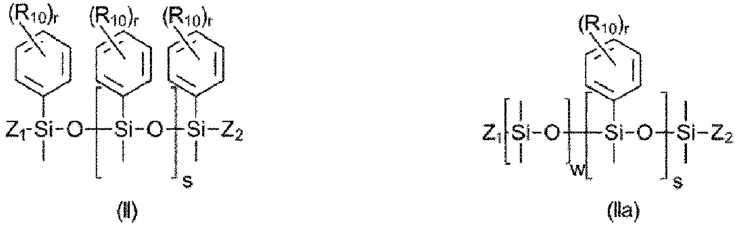 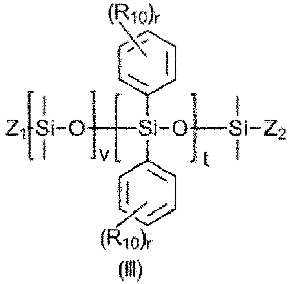 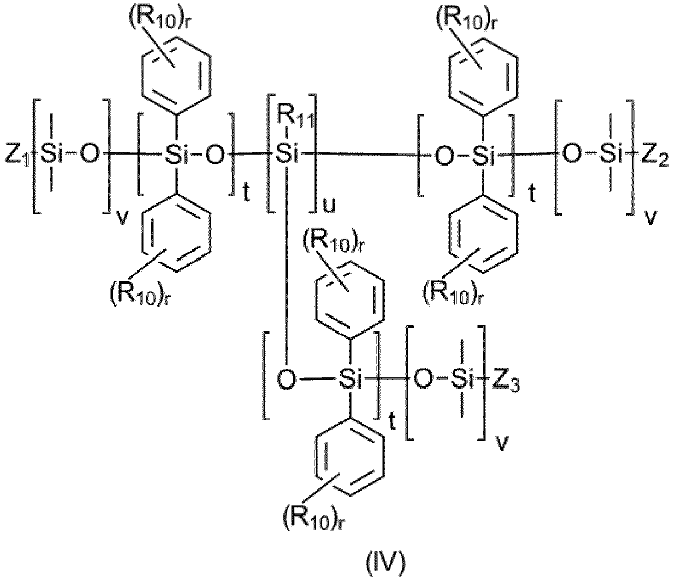 dans lesquelles
Z₁, Z₂ et Z₃ représentent, à chaque fois indépendamment les uns des autres, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN, de préférence méthyle, méthoxy, éthoxy, hydrogène ou hydroxy,
R₁₀ représente, à chaque fois indépendamment, hydrogène, méthyle, éthyle, propyle, butyle, isopropyle, isobutyle, isooctyle, isononyle ou isodécyle,
R₁₁ représente, à chaque fois indépendamment, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN,
r représente un nombre naturel entre 0 et 3,
s et t représentent, à chaque fois indépendamment l'un de l'autre, un nombre naturel entre 1 et 250, de préférence entre 1 et 100, en particulier de préférence entre 5 et 75,
w et v représentent, à chaque fois indépendamment l'un de l'autre, un nombre naturel entre 1 et 250, de préférence entre 1 et 100, en particulier de préférence entre 5 et 75 et
les groupes présentant les indices s, w, v, t et u peuvent se trouver sous forme statistiquement répartie dans le siloxane du composant (ii).

5. Composition de polycarbonate selon la revendication 4, **caractérisée en ce que**, dans les formules chimiques générales (II), (IIa), (III) et (IV)
Z₁, Z₂ et Z₃ représentent, à chaque fois indépendamment les uns des autres, méthyle, vinyle, méthoxy, éthoxy, hydrogène ou hydroxy, de préférence méthyle, hydroxy ou un mélange de méthoxy et d'éthoxy,
R₁₀ représente hydrogène ou méthyle,
R₁₁ représente, à chaque fois indépendamment, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN, de préférence méthyle ou phényle,
r représente un nombre naturel entre 0 et 3,
s représente un nombre naturel entre 5 et 75,
t représente un nombre naturel entre 1 et 75,
w représente un nombre naturel entre 5 et 75,
v représente un nombre naturel entre 1 et 75 et
u représente un nombre naturel entre 1 et 10.

6. Procédé pour la préparation de cocondensats séquencés de polysiloxane-polycarbonate, dans lequel on transforme
A) au moins un polycarbonate avec
B) au moins un (poly)siloxane terminé par hydroxyaryle avec utilisation de
C) au moins un siloxane de la formule chimique générale (I), (Ia) ou des mélanges quelconques de ceux-ci, 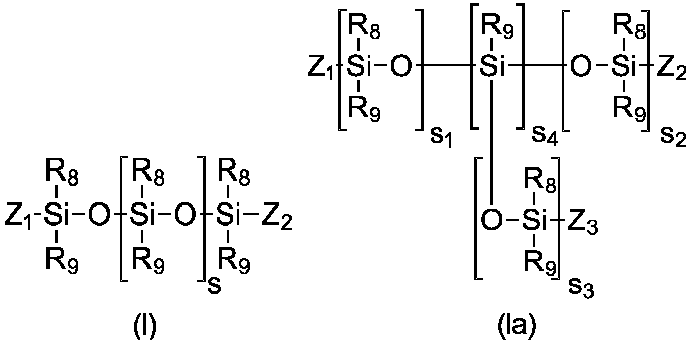 dans lesquelles
Z₁, Z₂ et Z₃ représentent, à chaque fois indépendamment les uns des autres, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN,
R₈ et R₉ représentent, à chaque fois indépendamment l'un de l'autre, un groupe aliphatique ou aromatique, sous réserve que, dans la formule (I) ou (la), au moins un R₈ représente un groupe aliphatique et au moins un R₉ représente un groupe aromatique et
s, s₁, s₂, s₃ et s₄ représentent, à chaque fois indépendamment les uns des autres, un nombre naturel entre 1 et 250,
en masse fondue, **caractérisé en ce que** le procédé comprend une étape d'addition du composant C) au composant A), au composant B) et/ou à un mélange du composant A) et du composant B).

7. Procédé pour la préparation de cocondensats séquencés de polysiloxane-polycarbonate selon la revendication 6, **caractérisé en ce que**
le composant B) étant un (poly)siloxane terminé par hydroxyaryle de formule (1), 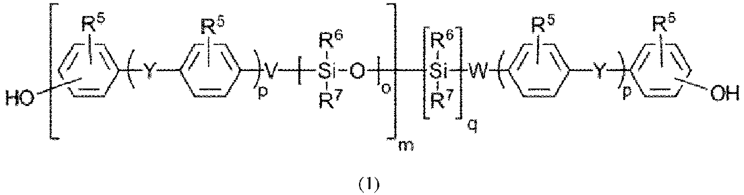 dans laquelle
R⁵ représente hydrogène ou C₁-C₄-alkyle, de préférence hydrogène ou méthyle,
R⁶ et R⁷ représentent, indépendamment l'un de l'autre, C₁-C₄-alkyle, de préférence méthyle,
Y représente une simple liaison, -CO-, -O-, C₁-C₅-alkylène, C₂-C₅-alkylidène ; ou un radical C₅-C₆-cycloalkylidène qui peut être monosubstitué ou polysubstitué par C₁-C₄-alkyle, de préférence une simple liaison, -O-, isopropylidène ; ou un radical C₅-C₆-cycloalkylidène, qui peut être monosubstitué ou polysubstitué par C₁-C₄-alkyle,
V représente oxygène, C₂-C₆-alkylène ou C₃-C₆-alkylidène, de préférence oxygène ou C₃-alkylène,
lorsque q = 0, W représente une simple liaison,
lorsque q = 1, W représente oxygène, C₂-C₆-alkylène ou C₃-C₆-alkylidène, de préférence oxygène ou C₃-alkylène,
p et q représentent, à chaque fois indépendamment, 0 ou 1,
o représente un nombre moyen de motifs récurrents de 10 à 400, de préférence de 10 à 100, et
m représente un nombre moyen de motifs récurrents de 1 à 10, de préférence de 1,5 à 5.

8. Procédé pour la préparation de cocondensats séquencés de polysiloxane-polycarbonate selon l'une quelconque des revendications 6 ou 7, **caractérisé en ce que** le composant B) est un (poly)siloxane terminé par hydroxyaryle des formules (2), (3), (VII), (VIII) ou (IX) : 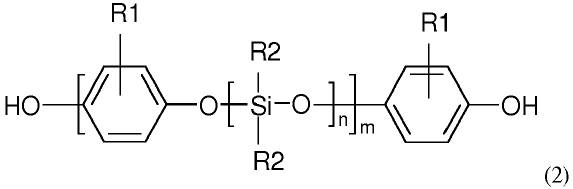 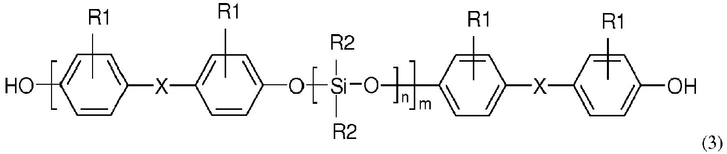 dans lesquelles
R1 représente hydrogène, C₁-C₄-alkyle, de préférence hydrogène ou méthyle,
R2 représente, indépendamment, aryle ou alkyle, de préférence méthyle,
X représente une simple liaison, C₁-C₅-alkylène, C₂-C₅-alkylidène, C₅-C₁₂-cycloalkylidène, -O-, -SO-CO-, -S-, -SO₂-, de préférence une simple liaison, isopropylidène, C₅-C₁₂-cycloalkylidène ou oxygène et de manière tout particulièrement préférée isopropylidène,
n représente un nombre entre 10 et 150,
m représente un nombre de 1 à 10, 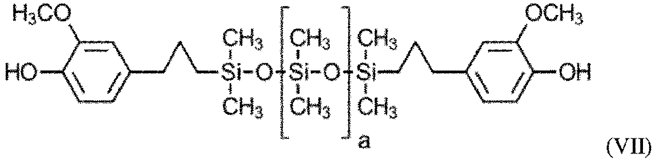 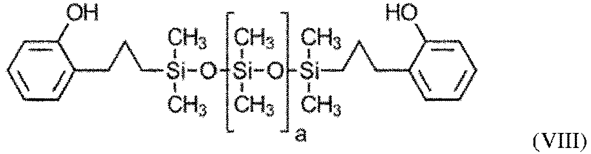 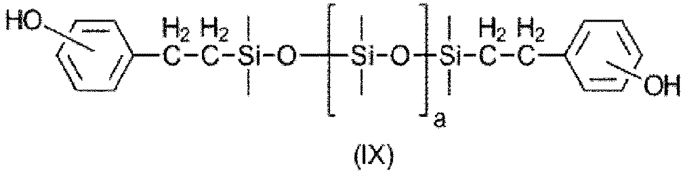
où a dans les formules (VII), (VIII) et (IX) représente un nombre moyen de 10 à 400, de préférence de 10 à 100 et en particulier de préférence de 15 à 50.

9. Procédé pour la préparation de cocondensats séquencés de polysiloxane-polycarbonate selon l'une quelconque des revendications 6 à 8, **caractérisé en ce que**
R₈ dans la formule chimique générale (I) ou (Ia) représente, à chaque fois indépendamment, méthyle, éthyle, propyle, butyle, isopropyle, isobutyle, vinyle, C₅-C₁₈-alkyle ; phényléthyle, phénylisopropyle, 3-phénylpropyle ou phényle, le cas échéant substitués par alkyle ou alcoxy, et
R₉ dans la formule chimique générale (I) ou (Ia) représente, à chaque fois indépendamment, méthyle, éthyle, propyle, butyle, isopropyle, isobutyle, vinyle, C₅-C₁₈-alkyle ; phényléthyle, phénylisopropyle, 3-phénylpropyle ou phényle, le cas échéant substitués par alkyle ou alcoxy,
sous réserve qu'au moins un R₈ représente méthyle, éthyle, propyle, butyle, isopropyle, vinyle, isobutyle ou C₅-C₁₈-alkyle et qu'au moins un R₉ représente phényléthyle, phénylisopropyle, 3-phénylpropyle ou phényle, le cas échéant substitués par alkyle ou alcoxy.

10. Procédé pour la préparation de cocondensats séquencés de polysiloxane-polycarbonate selon l'une quelconque des revendications 6 à 9, **caractérisé en ce que**
R₈ dans la formule chimique générale (I) ou (Ia) représente, à chaque fois indépendamment, méthyle, éthyle, triméthylphényle, -CH₂-CH₂-phényle, -CH₂-CH₂-CH₂-phényle, -CH₂-CH(CH₃)-phényle, -CH₂-CH₂-CH₂-(2-méthoxy)phényle ou phényle et
R₉ dans la formule chimique générale (I) ou (Ia) représente, à chaque fois indépendamment, méthyle, éthyle, triméthylphényle, -CH₂-CH₂-phényle, -CH₂-CH₂-CH₂-phényle, -CH₂-CH(CH₃)-phényle, -CH₂-CH₂-CH₂-(2-méthoxy)phényle ou phényle,
sous réserve qu'au moins un R₈ représente méthyle ou éthyle et qu'au moins un R₉ représente triméthylphényle ou phényle.

11. Procédé pour la préparation de cocondensats séquencés de polysiloxane-polycarbonate selon l'une quelconque des revendications 6 à 10, **caractérisé en ce que** ledit au moins un siloxane du composant C) est représenté par la formule chimique générale (II), la formule chimique générale (IIa), la formule chimique générale (III) et/ou la formule chimique générale (IV), 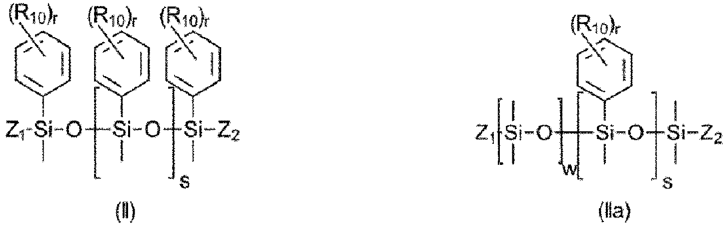 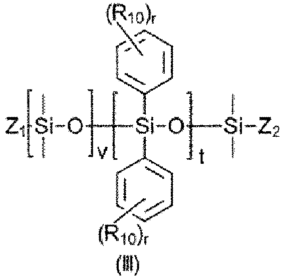 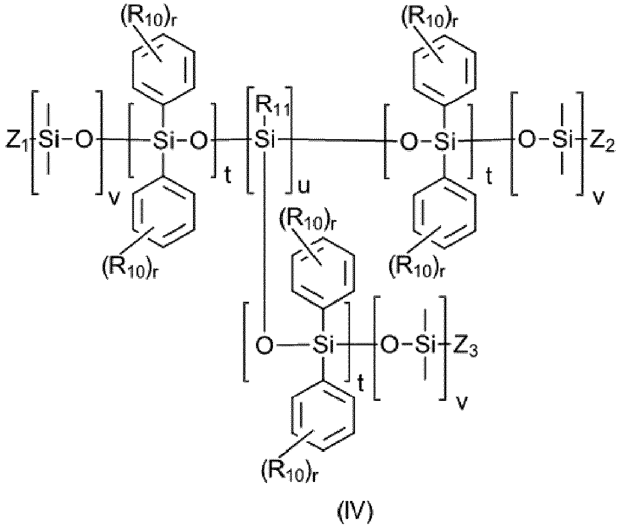 dans lesquelles
Z₁, Z₂ et Z₃ représentent, à chaque fois indépendamment les uns des autres, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou
R₁₀ phényle, le cas échéant substitués par alkyle ou alcoxy ; hydroxy, hydrogène, chlore, fluor ou CN, de préférence méthyle, méthyloxy, hydrogène ou hydroxy, représente, à chaque fois indépendamment, hydrogène, méthyle, éthyle, propyle, butyle, isopropyle, isobutyle, isooctyle, isononyle ou isodécyle,
R₁₁ représente, à chaque fois indépendamment, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN,
r représente un nombre naturel entre 0 et 3,
s et t représentent, à chaque fois indépendamment, un nombre naturel entre 1 et 250, de préférence entre 1 et 100, en particulier de préférence entre 5 et 75,
w et v représentent, à chaque fois indépendamment, un nombre naturel entre 1 et 250, de préférence entre 1 et 100, en particulier de préférence entre 5 et 75 et
les groupes présentant les indices s, w, v, t et u peuvent se trouver sous forme statistiquement répartie dans le siloxane du composant C).

12. Procédé pour la préparation de cocondensats séquencés de polysiloxane-polycarbonate selon la revendication 11, **caractérisé en ce que**, dans les formules chimiques générales (II), (IIa), (III) et (IV)
Z₁, Z₂ et Z₃ représentent, à chaque fois indépendamment les uns des autres, méthyle, vinyle, méthoxy, éthoxy, hydrogène ou hydroxy ou un mélange de méthoxy et d'éthoxy,
R₁₀ représente hydrogène ou méthyle,
R₁₁ représente, à chaque fois indépendamment, méthyle, éthyle, propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN,
r représente un nombre naturel entre 0 et 3,
s représente un nombre naturel entre 5 et 75,
t représente un nombre naturel entre 1 et 75,
w représente un nombre naturel entre 5 et 75 et
v représente un nombre naturel entre 1 et 75.

13. Procédé pour la préparation de cocondensats séquencés de polysiloxane-polycarbonate selon l'une quelconque des revendications 6 à 12, **caractérisé en ce que** 0,01 à 20% en poids du composant C) sont ajoutés au composant A), au composant B) et/ou à un mélange du composant A) et du composant B), les % en poids se rapportant à la somme des composants A), B) et C).

14. Utilisation d'un siloxane de la formule chimique générale (I), (Ia) ou de mélanges quelconques de ceux-ci, 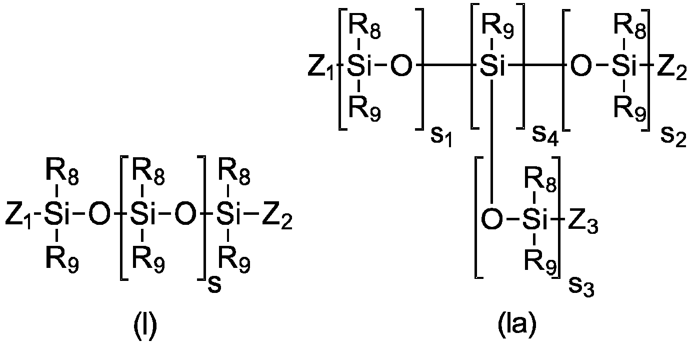 dans lesquelles
Z₁, Z₂ et Z₃ représentent, à chaque fois indépendamment les uns des autres, méthyle, éthyle,
R₈ et R₉ propyle, butyle, isopropyle, isobutyle, vinyle, propényle, butényle, C₅-C₁₈-alkyle, méthacryloxypropyle ; monodicarbinol, méthoxy, éthoxy, propoxy, butoxy, époxypropoxypropyle ; phényléthyle, phénylisopropyle, 3-phénylpropyle ou phényle, le cas échéant substitués par alkyle ou alcoxy ; hydroxy, hydrogène, chlore, fluor ou CN, représentent, à chaque fois indépendamment l'un de l'autre, un groupe aliphatique ou aromatique, sous réserve que, dans la formule (I) ou (la), au moins un R₈ représente un groupe aliphatique et au moins un R₉ représente un groupe aromatique et
s, s₁, s₂, s₃ et s₄ représentent, à chaque fois indépendamment les uns des autres, un nombre naturel entre 1 et 250,
pour la réduction de la répartition granulométrique des domaines de siloxane dans un cocondensat séquencé de polysiloxane-polycarbonate dans un procédé pour la préparation de ce cocondensat séquencé de polysiloxane-polycarbonate.

15. Utilisation selon la revendication 14, **caractérisée en ce que** le procédé pour la préparation du cocondensat séquencé de polysiloxane-polycarbonate comprend au moins une extrusion réactive ou au moins une transestérification en masse fondue.
